Europäisches Patentamt

European Patent Office

Office européen des brevets

(19)

(11) Numéro de publication : **0 010 492**
B1

(12)

# FASCICULE DE BREVET EUROPÉEN

(45) Date de publication du fascicule du brevet :
13.06.84

(51) Int. Cl.³ : **G 01 H  9/00, G 02 F  1/13,
G 10 K  11/02, G 01 N 29/04**

(21) Numéro de dépôt : **79400745.0**

(22) Date de dépôt : **12.10.79**

(54) Cellule acousto-optique à cristal liquide et dispositif de visualisation comportant une telle cellule.

(30) Priorité : **13.10.78 CA 313460**

(43) Date de publication de la demande :
**30.04.80 Bulletin 80/09**

(45) Mention de la délivrance du brevet :
**13.06.84 Bulletin 84/24**

(84) Etats contractants désignés :
**DE FR GB**

(56) Documents cités :
**DE-C-  914 684
FR-A- 2 177 410
FR-A- 2 368 108
US-A- 3 707 323
REVUE DE PHYSIQUE APPLIQUEE, vol. 12, no. 1 (1-
1977), pages 21-30 Paris FR S. NIGAI et al. "Acousto-
optical effects in a nematic liquid crystal"
COMPTE RENDU ACAD. SC. PARIS, vol. 284, no. 11
(14-03-1977), Serie B 219-222. Paris FR J.L. DION "Un
nouvel effet des ultrasons sur l'orientation d'un cristal liquide"**

(73) Titulaire : **Dion, Jean-Luc
3760, rue Montpellier
Trois-Rivières Québec, G8Y 3P2 (CA)**

(72) Inventeur : **Dion, Jean-Luc
3760, rue Montpellier
Trois-Rivières Québec, G8Y 3P2 (CA)**

(74) Mandataire : **Nony, Michel
Cabinet Nony 29, rue Cambacérès
F-75008 Paris (FR)**

Jouve, 18, rue St-Denis, 75001 Paris, France

## Description

La présente invention a trait au domaine de l'imagerie acoustique avec détecteurs à cristal liquide et concerne plus particulièrement la réalisation de cellules acousto-optiques à cristal liquide nématique avec parois stratifiées, permettant de convertir directement et instantanément l'hologramme acoustique d'un objet et de ses structures internes en une image visible. Ces cellules permettent d'atteindre, avec les procédés appropriés également décrits, une sensibilité à l'énergie acoustique, un pouvoir de résolution et une plage dynamique considérablement améliorés par rapport aux procédés antérieurs.

En imagerie ou holographie acoustique, on s'intéresse avant tout aux divers moyens d'obtenir une représentation visuelle d'objets ou de corps et plus particulièrement de leur structure cachée en les irradiant avec de l'énergie acoustique qu'ils peuvent transmettre, réfléchir ou diffracter de façon générale, puis en détectant cette dernière pour en tirer une image interprétable. Les cellules acousto-optiques permettent de visualiser les diverses parties des corps solides ou liquides transparents aux ultrasons en convertissant directement en image visible, à l'aide d'une source lumineuse, l'image ou l'hologramme acoustique de ces corps.

On utilise présentement diverses techniques d'imagerie acoustique y compris l'holographie acoustique pour obtenir une image visible d'un corps transparent aux ultrasons. Ainsi, l'échographie ultrasonore sert couramment en médecine et en essais non destructifs des matériaux pour obtenir des images bidimensionnelles de l'intérieur des corps. Par exemple, des tomographies axiales d'un objet ou encore des vues suivant un plan transversal au faisceau d'ultrasons peuvent être obtenus par échographie. Certains systèmes ont un seul transducteur ultrasonore déplacé mécaniquement et fonctionnent assez lentement. D'autres ont une multiplicité de transducteurs fixés dans une matrice rectiligne ou bi-dimensionnelle, alimentés en phase par une électronique de grande complexité. On trouve de nombreux articles sur le sujet dans des publications telles que, par exemple, « IEEE Transaction on Sonics and Ultrasonics », « Ultrasonics » (G.B.), « Journal of the Acoustical Society of America », « Journal of Applied Physics », etc. Divers systèmes du genre sont décrits dans l'article « Status of Research in Acoustic Imaging », par H. W. Jones, vol. 90 — Acousto-optics —, p. 92-100 (Soc. Photo-Optical Instrum. Eng., 1976). Quoique ces systèmes sensibles fonctionnent en temps réel, leur pouvoir de résolution est très faible.

L'holographie acoustique à relief de surface liquide est une technique également utilisée. Ses principes et ses réalisations sont particulièrement décrits dans les brevets US 3 879 989 et 3 765 403 de B. B. Brenden. Ce dernier a rédigé un article sur la question : « History and Present Status of Liquid Surface Acoustical Holography », J. Acoust. Soc. Am., vol. 58, Nº 5 (1975), p. 951-955. Dans ce procédé, l'image de l'objet est formé par une lentille acoustique sur une surface liquide qui agit comme détecteur. Un deuxième faisceau d'énergie acoustique cohérente est dirigé vers la surface où se forme un réseau de rides constituant l'hologramme acoustique de l'objet. Un faisceau intense de lumière cohérente est alors diffracté par cet hologramme puis traité par le système optique approprié pour restituer une image visible de l'objet ultrasonore. Toutefois, les systèmes d'imagerie acoustique basés sur ce procédé sont de faible sensibilité et les images produites comportent des défauts importants dus à la cohérence des ultrasons. De plus, le détecteur étant une surface liquide, la géométrie d'utilisation est forcément limitée et il est sujet aux vibrations parasites.

On trouve, en outre, la description de diverses techniques d'image et d'holographie acoustiques dans plusieurs articles de revue, particulièrement « Acoustic Imaging with Holography and Lenses » par G. Wade, IEEE Trans. Sonics Ultrasonics vol. SU-22, Nº 6 (1975), p. 385-394 ; « Holography and Acoustics », par P. Gréguss, dans « Acoustics and Vibration Progress », colligé par R. V. B. Stephens et H. G. Leventhall (Chapman and Hall, Londres 1976) ; aussi « Imagerie et holographie ultrasonore », par Pierre Alais, Revue de Phys. Appliquée, vol. 11, Nº 5 (1976), p. 559-580. On y décrit en particulier un procédé utilisant une cellule de Pohlmann. Ce détecteur quadratique est formé d'une suspension de micro-disques métalliques dans un liquide dense, en couche mince entre des parois transparentes aux ultrasons. Un champ acoustique est rendu visible par la réorientation et la migration des micro-disques qu'il produit. Toutefois, la sensibilité du dispositif est faible (1 mW/cm$^2$) et son temps de réponse élevé supérieur à 1 seconde. Un autre procédé antérieur est la cellule à cristal liquide décrite par Gréguss dans l'article mentionné plus haut. Ce dispositif est décrit plus exactement dans un autre article du même auteur : « A New Liquid Crystal Acoustical-to-Optical Display », Acustica, vol. 29, Nº 1 (1973). Ce dispositif antérieur utilise une couche de cristal liquide dont la sensibilité est très faible : l'intensité ultrasonore incidente doit être de plusieurs mW/cm$^2$ pour produire une interaction visible. Ce dispositif antérieur a aussi un champ acoustique très étroit. De plus, le couplage de modes acoustiques dans les parois produit des vibrations parasites de cisaillement donnant des figures visibles indésirables.

Le brevet français 2 177 410 décrit un dispositif d'holographie ultrasonique utilisant une cellule d'affichage visuel piézo-électrique comprenant une couche mince de cristaux liquides alignés contenue entre deux simples lames de verre, éventuellement recouvertes de couches d'adaptation acoustique et dont l'épaisseur est égale à au moins une demi-longueur d'onde acoustique dans le verre.

Ce dispositif destiné en principe à servir d'auxiliaire visuel pour sourd ne peut en pratique que fournir de mauvaises images. En effet l'épaisseur des lames n'est égale à une demi-longueur d'onde que si l'incidence de l'onde est normale. Or il est connu que la transmission des ultrasons, en particulier pour de telles épaisseurs de lames, varie de façon très complexe avec l'angle d'incidence et diminue avec celui-ci.

Les images obtenues avec le dispositif de ce brevet antérieur ont donc nécessairement des défauts.

La présente invention se propose de remédier aux inconvénients mentionnés ci-haut des détecteurs acousto-optiques connus et plus particulièrement de réaliser des cellules acousto-optiques fonctionnant selon un nouveau mode de couplage du vecteur d'onde acoustique avec la direction des molécules d'un cristal liquide nématique, ce mode de couplage produisant une distorsion de la structure du cristal liquide et un changement visible des priorités optiques de ce dernier pour des intensités acoustiques très inférieures à celles requises dans les cellules antérieures.

Plus précisément la présente invention a pour objet une cellule acousto-optique, comportant une couche de cristal liquide nématique orienté contenue entre des parois stratifiées caractérisée en ce que chacune desdites parois comprend deux lames ou couches rigides ayant sensiblement la même épaisseur, l'espace entre lesdites lames étant occupé par un matérieu d'impédance acoustique différente de, et notamment inférieure à, celle desdites lames, lesdites parois réalisant l'adaptation d'impédance acoustique avec le milieu extérieur pour des angles d'incidence de l'énergie acoustique sensiblement entre 0° et 12°, ainsi qu'entre 40° et 50° simultanément.

L'invention est également relative à un dispositif de visualisation sonore d'un objet, comprenant une enceinte contenant un liquide permettant la propagation des ondes acoustiques, ladite enceinte comportant une fenêtre acoustiquement transparente pouvant admettre de l'énergie acoustique provenant d'une source acoustique extérieure et au moins une paroi optiquement transparente laissant passer la lumière venant d'une source lumineuse extérieure, ladite enceinte comprenant une première source d'énergie acoustique ou transducteur sonore produisant des ondes substantiellement planes, un système de lentilles acoustique pouvant donner une image avec l'énergie acoustique venant de l'extérieur et des prismes de matière acoustiquement absorbante disposés de façon à réduire substantiellement la réflexion de l'énergie acoustique dans ladite enceinte, la source extérieure d'énergie acoustique dite deuxième source étant dans un liquide en contact avec ladite enceinte et servant à irradier l'objet à examiner ladite énergie acoustique pouvant ensuite pénétrer dans l'enceinte par ladite fenêtre acoustiquement transparente, le dispositif comportant en outre un système optique adjacent à ladite enceinte servant à produire un faisceau de lumière sensiblement cylindrique qui pénètre dans ladite enceinte par ladite paroi optiquement transparente caractérisé en ce qu'il comprend dans ladite enceinte une cellule à cristal liquide telle que définie précédemment, une plaque faite d'un matériau optiquement transparent et acoustiquement réflecteur placée entre ladite cellule et une desdites parois optiquement transparentes, ledit faisceau étant orienté de façon à rencontrer ladite cellule à cristal liquide sous une incidence voisine de la normale, le faisceau ayant interagi avec ledit cristal liquide pouvant ensuite sortir de ladite enceinte par une paroi optiquement transparente et être capté par un détecteur optique pour donner une représentation visuelle du champ acoustique associé audit objet à examiner.

Des formes de réalisation préférées de la présente invention seront décrites ci-après avec référence aux dessins annexés, dans lesquels :

La figure 1 illustre de façon schématique l'effet d'une onde ultrasonore sur l'orientation des molécules d'un cristal liquide :

La figure 2 montre la variation de transmission lumineuse d'une cellule acoustooptique à cristal liquide en fonction de la pression acoustique de l'onde incidente ;

La figure 3 présente une forme de réalisation d'une cellule à cristal liquide à parois stratifiées solides ;

La figure 4 montre une méthode d'assemblage des parois d'une cellule acousto-optique ;

La figure 5 représente une onde acoustique se propageant dans un milieu stratifié :

La figure 6 montre la variation typique du coefficient de transmission acoustique d'une cellule à parois stratifiées en fonction de l'angle d'incidence ;

La figure 7 illustre une cellule acousto-optique à cristal liquide capable de créer un champ électrique pour la réorientation des molécules du cristal liquide ;

La figure 8 représente une cellule acousto-optique avec une seule électrode interne pour la production d'un champ électrique de réorientation ;

La figure 9 montre une cellule acousto-optique de grande rigidité ;

La figure 10 représente une cellule acousto-optique pourvue d'une matrice de photo-détecteurs ;

La figure 11 illustre l'action de deux ondes ultra-sonores cohérentes sur l'orientation d'une couche de cristal liquide ;

La figure 12 illustre l'effet de la réorientation des molécules de cristal liquide sur la transmission de la lumière ;

La figure 13 montre une caméra ultrasonore holographique utilisant une cellule acousto-optique à cristal liquide ;

La figure 14 représente un détail de la caméra ultrasonore ;

La figure 15 montre un détail d'un arrangement possible de la caméra ;

La figure 16 illustre le principe de la méthode de démodulation de l'hologramme-image donné par une cellule acousto-optique ;

La figure 17 représente le schéma-bloc du dispositif de la démodulation électronique d'un hologramme-image.

La figure 18 montre une façon d'obtenir l'image de phase d'un objet acoustique au moyen d'une cellule acousto-optique ;

La figure 19 illustre une façon de restituer une image visible d'un objet à partir de son hologramme-image acoustique ;

La figure 20 représente un montage simplifié permettant de visualiser un champ ultrasonore ;

La figure 21 montre une autre caméra ultrasonore holographique utilisant une cellule acousto-optique à cristal liquide ;

La figure 22 représente une caméra ultrasonore holographique utilisant une cellule transparente à cristal liquide.

Si une couche mince de cristal liquide orienté est incluse entre des parois transparentes aux ultrasons, cette forme d'énergie induit une réorientation des molécules, pouvant produire des effets visibles avec l'optique appropriée. Différents types d'interaction des ondes acoustiques avec un cristal liquide existent. Une première interaction ultrasonore observée dans un cristal liquide nématique est rapportée par L. W. Kessler et S. P. Sayer, dans Applied Physics Letters, Vol. 17 n° 10 (1970). D'autres expériences de nature différente sont particulièrement décrites par S. Letcher, J. Lebrun et S. Candau dans Journal of the Acoustical Society of America, vol. 63 n° 1 (1978), p. 55. Dans les réalisations antérieures, incluant celle de Gréguss, mentionnées plus haut, chaque paroi de cellules utilisées n'était constituée que d'une seule lame de verre. Ceci a pour effet de limiter considérablement l'ouverture du champ acoustique de ces cellules : pour des angles d'incidence différents de 0°, il y a réflexion multiple des ondes ultrasonores sur les parois, ce qui induit des écoulements ou turbulences dans le cristal liquide produisant des réorientations désordonnées des molécules et des effets visibles indésirables.

La présente cellule est toutefois basée sur la découverte d'un effet très différent des précédents, par lequel les vibrations acoustiques produisent une réorientation moléculaire ordonnée, sans écoulement appréciable du cristal liquide. De plus, l'effet se manifeste pour des intensités ultrasonores très inférieures à celles utilisées antérieurement. Cet effet se manifeste également dans d'autres types de cristaux liquides, tels que les cholestériques et les smectiques. La présente cellule acousto-optique n'est limitée à aucune fréquence ultrasonore particulièrement, mais donne toutefois des résultats remarquables dans une gamme de 0.5 à 15 MHz.

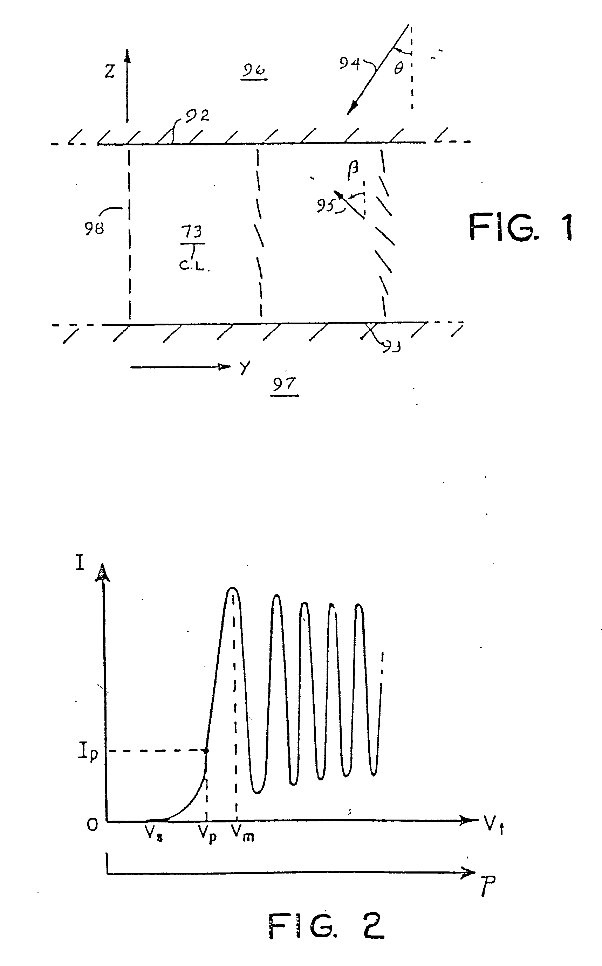

La figure 1 montre une couche de cristal liquide nématique 73, initialement de structure homotrope 98, c'est-à-dire, dont les molécules sont orientées perpendiculairement aux parois 92 et 93. Un rayonnement acoustique 94 est incident avec un angle θ, et une intensité I qui augmente dans la direction « Y ». En vertu du nouvel effet utilisé dans la présente cellule les longues molécules organiques du cristal liquide (c. l.) tendent à s'orienter perpendiculairement au déplacement acoustique de façon à y minimiser les pertes acoustiques.

On trouve que le couple M exercé sur les molécules par unité de volume est donné par : $M = Cp^2 \sin 2 \phi = C'I \sin 2 \phi$ (1) ou $\phi = \theta - \beta$ est l'angle entre l'axe moléculaire et la direction moyenne du déplacement acoustique ou direction de propagation de l'onde acoustique, C et C' sont des constantes propres au c. l. utilisé et à son épaisseur, et p est la pression acoustique de l'onde ultrasonore. Si les molécules près des parois 92 et 93 sont fortement ancrées, la structure du cristal liquide 73 subit une distorsion β (z) comme illustrée, où 95 indique la rotation maximale au milieu de la couche. Cette rotation augmente comme indiqué avec l'intensité ultrasonore I, de façon sensiblement proportionnelle. L'absence relative de réflexions multiples des ondes acoustiques entre les parois est une condition essentielle de production d'un effet visible utilisable. Ces parois doivent être par conséquent très transparentes aux ondes acoustiques 94. L'impédance acoustique d'entrée de 92 ou 93 doit donc être adaptée à celle des milieux de propagation 96, 97. Si $Z_0$ est l'impédance caractéristique du milieu de propagation d'un côté, et $Z_i$ l'impédance acoustique présentée par la paroi de ce côté (impédance d'entrée), on sait que le coefficient de réflexion R pour la pression acoustique est :

$$R = \frac{Z_i - Z_0}{Z_i + Z_0} \qquad (2)$$

R est généralement complexe et s'annule seulement quand $Z_1 = Z_0$. Une caractéristique des présentes cellules acousto-optiques est de réaliser cette dernière condition presque parfaitement à une fréquence donnée, pour des valeurs étendues de l'angle d'incidence θ. Les milieux de propagation 96 et 97 peuvent être des liquides identiques ou différents, et même un des milieux ou les deux peuvent être solides, en autant que la condition précédente est satisfaite. Comme le cristal liquide est bi-réfringent, sa distortion modifie la lumière polarisée qui le traverse simultanément. On a découvert les faits suivants : la transmission lumineuse τ par une cellule à cristal liquide nématique homotrope placée entre polariseurs croisés dont les axes sont inclinés de 45° sur le plan d'incidence de l'énergie acoustique de l'onde ultrasonore, varie comme illustré à la figure 2 en fonction de la pression acoustique p ou la tension V appliquée au transducteur ultrasonore. Pour $\tau \leqslant 0.5$, on trouve de plus que :

$$\tau \simeq K_1 \, p^8 \simeq K_2 I^4 \qquad (3)$$

4

où $K_1$ et $K_2$ sont des constantes propres à une cellule donnée, qui dépendent en particulier de l'angle θ. Il a aussi été déterminé que pour une intensité ultrasonore I et un θ donnés, la transmission τ varie avec l'épaisseur a du cristal liquide comme :

$$\tau \simeq K_3\, a^{10} \tag{4}$$

pour $\tau \leqslant 0.5$, où $K_3$ est une constante. Dans les réalisations de la présente invention, a est habituellement compris entre 25 et 500 µm. On peut dire qu'il se produit un couplage direct entre le vecteur d'onde d'une onde acoustique longitudinale et l'axe des molécules de cristal liquide, produisant le couple décrit par l'éq. 1. Par conséquent, les variations d'intensité d'un champ acoustique, correspondant à une image qui se forme sur une cellule acousto-optique, se traduisent directement en une distorsion du c. l. qui produit conséquemment une variation de transmission lumineuse et donc une image visible.

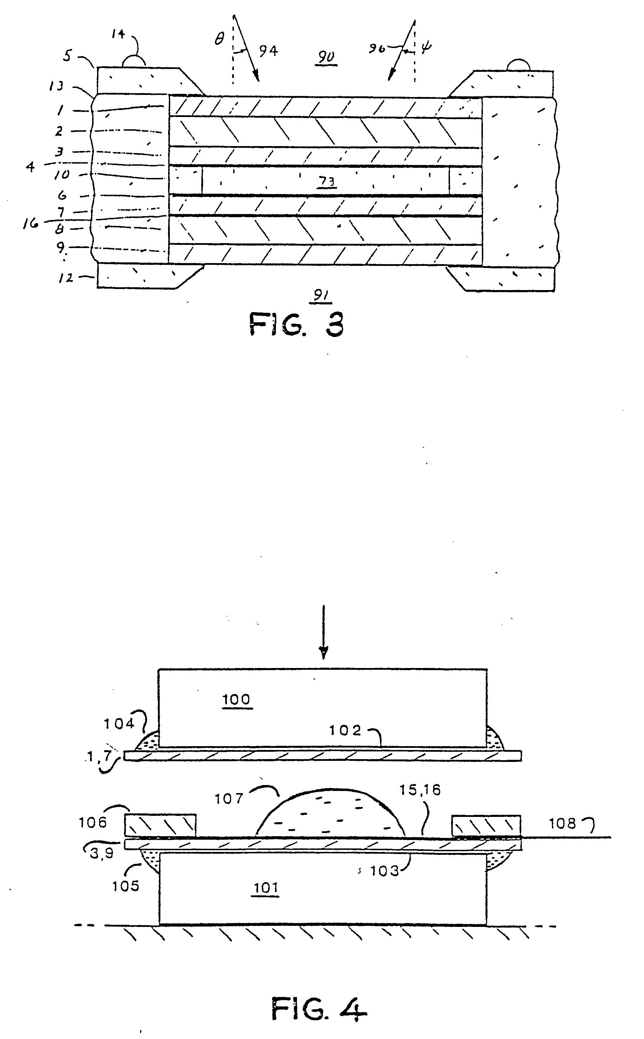

La figure 3 montre un mode de réalisation de la présente invention où la couche de c. l. 73 est incluse entre des parois stratifiées rigides 1, 2, 3 et 7, 8, 9. Les couches 4 et 6 sont des couches très minces, monomoléculaires, d'un surfactant servant à donner l'orientation voulue au c. l. Cette technique bien connue dans le domaine est particulièrement discutée dans un article de F. J. Kahn et coll. : « Surface produced aligment of liquid crystals », Proc. IEEE, vol. 61, N° 7 (1973), p. 823. Un surfactant convenable pour l'obtention de l'alignement perpendiculaire (homotrope) est la lécithine, un autre est le bromure d'ammonium hexadécyl-triméthyl, mais ils ne sont aucunement les seuls.

Dans les configurations illustrées, les milieux de propagation 90, 91 sont un même liquide d'impédance acoustique :

$$Z_0 = \rho_0 C_0 \tag{5}$$

où $\rho_0$ est la masse volumique du liquide et $c_0$, la vitesse du son dans ce liquide. L'eau est un milieu de propagation convenable, mais non exclusif. La plupart des composés nématiques qui ont leur mésophase ou phase cristalline liquide centrée sur une température d'environ 20 °C, peuvent servir convenablement. Un tel composé est un mélange eutectique (50 %-50 %) de MBBA (p-méthoxy-benzylidène-p-n-butylaniline) et de EBBA (p-éthoxy-benzylidène-p-n-butylaniline) qui a une anisotropie diélectrique négative. On utilise aussi des composés ayant une anisotropie diélectrique positive. La plupart des c. l. utilisés ont une impédance acoustique :

$$Z_c = \rho_c c_c \tag{6}$$

qui est pratiquement celle de l'eau. Dans ce cas, les deux parois auront la même structure. Une structure préférée est composée d'un matériau solide clair 2 (ou 8), de faible impédance acoustique :

$$Z_2 = Z_8 = \rho_2 c_2 = \rho_8 c_8 \tag{7}$$

entre des couches identiques 1, 3 (ou 7, 9) d'un matériau solide clair d'impédance :

$$Z_1 = Z_3 = Z_7 = Z_9 = \rho_1\, c_1 = \rho_3\, c_3 = \rho_7\, c_7 = \rho_9\, c_9 \tag{8}$$

La valeur de $Z_2$ (ou $Z_8$) est intermédiaire entre $Z_0$ et $Z_1$ (ou $Z_3$, ou $Z_7$ ou $Z_9$). L'épaisseur des diverses couches est déterminée par leur impédance acoustique et la fréquence des ultrasons, comme il est discuté plus loin. Des matériaux convenables pour les couches 1, 3, 7, 9 sont, par exemple, le verre, le quartz fondu, ou autres matériaux de grande impédance acoustique. Dans une des parois, une de ces deux couches ou les deux peuvent être d'un matériel optiquement opaque et réfléchissant. Par exemple, dans une réalisation où les matériaux sont optiquement transparents, un film métallique réflecteur 16 d'aluminium ou d'argent peut être déposé sur la couche 7 ou 8, de façon à ce que la lumière 96 fasse l'aller-retour dans le c. l. 73. Un matériau convenable pour les couches intermédiaires 2 et 3 est une pellicule de polymère, collée aux autres couches avec un ciment clair. Ce matériau peut aussi être une résine de polyester claire injectée entre les lamelles adjacentes 1, 3 (ou 7, 9) qui se polymérise et durcit avec le temps. La figure 4 montre une technique d'assemblage de cette structure. Les couches ou lamelles 1, 7 et 3, 9 sont appliquées sur des plaques de verre plat 100 et 101 par l'intermédiaire d'un film liquide 102, 103 qui assure une ferme adhésion. Le contour est ensuite scellé avec un vernis 104, 105. Une cale en forme de cadre 106 détermine l'épaisseur de la résine. Une quantité suffisante de cette résine 107 (couche 2 ou 8, fig. 3) est ensuite déposée sur la lamelle inférieure 3, puis l'ensemble supérieur est appliqué sur la cale 106. Si requis, le film conducteur 15, 16 est placé entre la résine et la couche 3, 9. Le raccord électrique avec l'extérieur est assuré par une languette métallique 108 en contact avec la couche conductrice 15, 16. On obtient ainsi une paroi stratifiée plane dont les dimensions peuvent dépasser $15 \times 15$ cm² et qui n'est pas bi-réfringente. Ce milieu intermédiaire 2 ou 8 peut aussi être un liquide, mais aux dépens de la rigidité et de l'uniformité d'épaisseur. Une des couches optiquement transparentes, ou deux, dans les côtés opposés de la cellule, peut être composée d'un matériau polarisant. Dans le cas où le c. l. est un nématique homotrope, les deux polariseurs sont croisés. Mais leur orientation mutuelle n'est

**0 010 492**

aucunement restreinte à celle-ci, particulièrement si la structure du c. l. est homogène (molécules parallèles aux parois) ou tordue, ou encore si on utilise un cristal liquide cholestérique ou smectique. Une des couches transparentes peut aussi être bi-réfringente et constituer une lame de phase, demi-onde ou quart-d'onde. Une cale 10 en forme de cadre détermine l'épaisseur du cristal liquide 73 (fig. 3). La structure est maintenue par des cadres 5 et 12, qui sont fixés ensemble par les boulons 14, et scellée par un mastic ou un époxy 13. Ces cadres peuvent, par exemple, être faits en métal, en céramique ou en plastique.

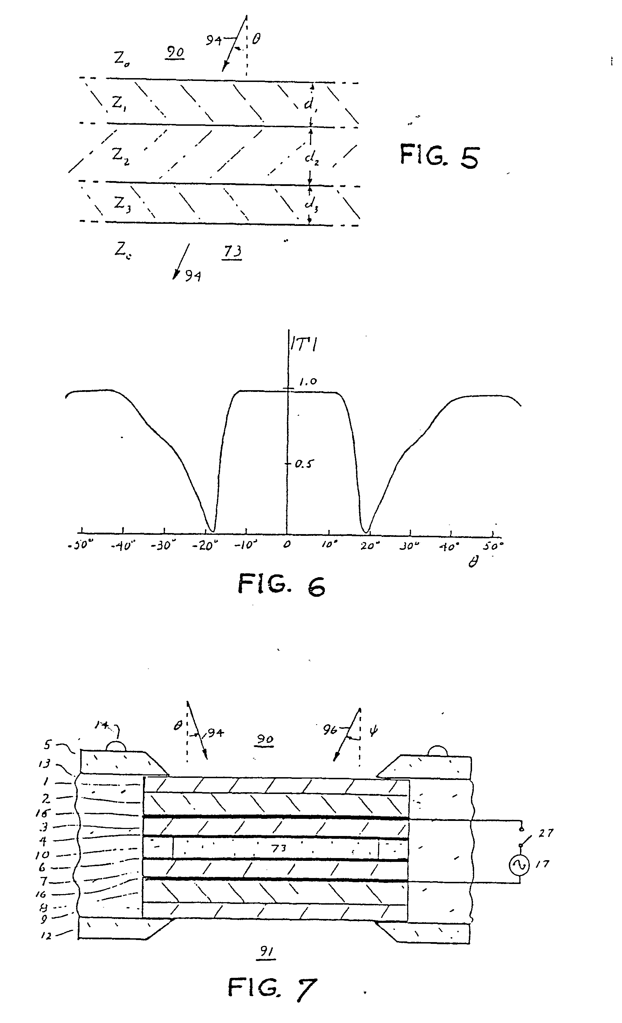

La transmission acoustique de telles couches stratifiées est donnée par des formules classiques qu'on trouve particulièrement dans le livre intitulé « Waves in layered media », par L. M. Brekhovskikh (Academic Press, New York, 1960). Si on réfère à la figure 5 qui représente une paroi triple de matériaux d'impédances acoustiques $Z_1$, $Z_2$, $Z_3$, d'épaisseurs $d_1$, $d_2$, $d_3$, entre des milieux de propagation 90, 73, d'impédances $Z_0$, $Z_c$, l'impédance d'entrée $Z_i$ présentée par la structure à une onde acoustique 94 est une fonction complexe :

$$Z_i = g(Z_0, Z_1, Z_2, Z_3, Z_c, c_0, c_1, c_2, c_3, c_c, d_1, d_2, d_3, f, \theta) \tag{9}$$

où f est la fréquence de l'onde. Le coefficient de réflexion est donné par la formule 2 et le module du coefficient de transmission T est donc :

$$|T| = (1 - |R|^2)^{1/2} \tag{10}$$

Dans les réalisations courantes de la présente invention,

$$Z_0 \simeq Z_c, \, d_1 = d_3, \, Z_1 = Z_3 \quad \text{et} \quad Z_0 < Z_2 < Z_1 \, .$$

On démontre dans ce cas, et l'expérience le vérifie, que pour un $d_1 = d_3$ donné, à une fréquence f donnée, la transmission T à incidence normale $\theta = 0°$ est essentiellement de 100 %, pour une certaine épaisseur minimum $d_2$ de la couche intermédiaire. De plus, la transmission atteint pratiquement 100 % pour une gamme d'angles d'incidence élevés. Une caractéristique des modes de réalisations de la présente invention est une transmission acoustique voisine de 100 % pour des incidences $\theta$ d'environ − 12° à + 12° et autour de ± 45°, tel qu'illustré à la figure 6. Il s'ensuit qu'il n'y a pratiquement pas d'ondes stationnaires dans le c. l. 73, de sorte que l'effet des ultrasons décrit plus haut se produit de façon visible pour des intensités ultrasonores I inférieures à 100 $\mu$W/cm², sans parasites. Un avantage important de ces couches multiples est leur solidité : à épaisseur égale, elles résistent beaucoup mieux aux contraintes et aux chocs que des parois de verre simples, par exemple. A une fréquence d'opération de 3 MHz, les épaisseurs $d_1$, $d_2$, $d_3$ des différentes couches sont du même ordre de grandeur et comprises entre 100 et 200 $\mu$m pour $d_1$ et $d_3$, et entre 15 et 125 $\mu$m pour $d_2$.

Un trait remarquable des diverses réalisations est l'interaction acousto-optique maximale dans le cristal liquide permise par la transparence acoustique élevée des couches. Si on se réfère aux figures 1 et 3, une onde acoustique 94, incidente avec un angle $\theta$ sur les couches stratifiées de la cellule à c. l. produira une distorsion ou rotation $\beta$(b) des molécules, par suite du couple donné par l'équation 1. La bi-réfringence optique effective du milieu est conséquemment modifiée, ce qui produit un déphasage $\phi$ entre les ondes lumineuses ordinaires et extraordinaires issues de l'onde incidente 96. Connaissant la distribution $\beta$(z), $\phi$ peut être calculé et on en déduit la transmission lumineuse $\tau$ à travers le c. l. par la formule connue :

$$\tau = \sin^2 2 \, \gamma \, \sin^2\left(\frac{1}{2} \, \phi\right), \tag{11}$$

où $\gamma$ est l'angle entre le plan de polarisation de la lumière incidente et le plan déterminé par l'axe des molécules et la normale à la couche. Cette équation montre qu'une variation de transmission lumineuse à travers la couche de c. l. est consécutive à l'incidence d'énergie acoustique qui entraîne une distorsion $\beta$(z) de la structure moléculaire et un déphasage $\phi$ des composantes de la lumière. Cette lumière est monochromatique ou quasimonochromatique, mais dans plusieurs cas, la lumière blanche suffit. La cellule à c. l. de la figure 3 peut comporter une couche réfléchissante 16. Dans ce cas, la lumière 96 venant du milieu 90 fait l'aller-retour dans le c. l., ce qui double le déphasage $\phi$. L'équation (11) montre que pour de faibles valeurs de $\phi$, la transmission $\tau$ sera alors quatre fois plus élevée que pour une cellule transparente vue que $\tau$ est alors proportionnel au carré de $\phi$. Par conséquent, pour avoir une sensibilité acousto-optique supérieure, on utilisera une couche 16 réfléchissante.

La figure 7 représente une autre forme de réalisation de la cellule acousto-optique où un champ électrique est produit au sein du c. l. 73 afin de rétablir rapidement l'orientation initiale des molécules qui possèdent généralement une anisotropie diélectrique positive. Ce champ est créé par des couches électriquement conductrices 15, 16 dont au moins une (15) est optiquement semi-transparente. Elles sont reliées à une source de tension alternative 17 avec interrupteur 27. La fréquence utilisée est en général entre 50 Hz et 25 kHz, avec des tensions comprises entre 2 et 200 volts. Par ailleurs, cette réalisation est

6

entièrement identique à celle de la figure 3. Si l'axe des molécules est normalement perpendiculaire aux parois (structure homotrope), cette orientation sera rétablie à condition que le c. l. ait une anisotropie diélectrique $(E_{11} - E_1)$ positive, où $E_{11}$ est la permittivité électrique parallèle à l'axe moléculaire, et $E_1$ la permittivité perpendiculaire à l'axe moléculaire.

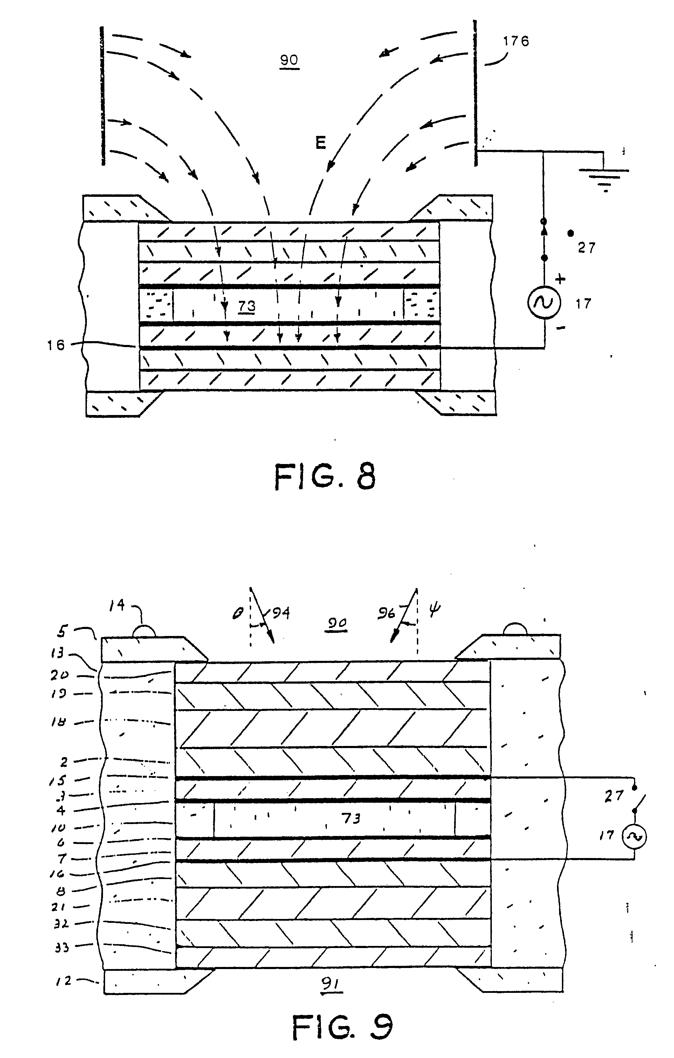

On peut aussi se dispenser d'au moins une des électrodes dans certaines réalisations, comme le montre la figure 8. Dans cette réalisation, l'électrode semi-transparente de la fig. 7 est éliminée et remplacée par une électrode extérieure 176 plongée dans le milieu liquide 90. Ce milieu étant de préférence un liquide modérément ionisé, une fraction assez élevée de la chute de tension alternative se produit à travers la couche de cristal liquide 73, créant ainsi un champ électrique alternatif E de réorientation des molécules du cristal liquide 73 quand la source 17 est raccordée en fermant l'interrupteur 27.

La figure 9 montre une réalisation de cellule acousto-optique à cristal liquide dont les principes et les avantages sont identiques à ceux des figs. 3 et 7, sauf que les parois ont plus de couches et sont par conséquent plus solides. La paroi composée des couches principales 20, 19, 18, 2, 3 (ou l'autre : 7, 8, 21, 32, 33), sans compter les électrodes 15, 16 et les couches de surfactant 4, 6, est équivalente à la superposition de deux parois telles que 1, 2, 3 de la figure 3. Ainsi, dans une réalisation préférée, l'épaisseur de 18 (ou 21) sera le double de celle de 20 et 3 (ou 7 et 33). La transmission acoustique T d'une telle structure est sensiblement la même qu'à la figure 6, en fonction de l'incidence $\theta$. Les électrodes 15, 16 ont la même fonction qu'à la fig. 7 : rétablir l'orientation initiale des molécules de c. l. par un champ électrique. On peut aussi omettre au moins une des électrodes 15, 16 dans certaines réalisations comme il a été dit plus haut en rapport avec la figure 8. D'autres réalisations selon la figure 9 peuvent aussi comporter des couches polarisantes dans les parois opposées. Une des couches peut aussi constituer une lame optique de phase comme précédemment.

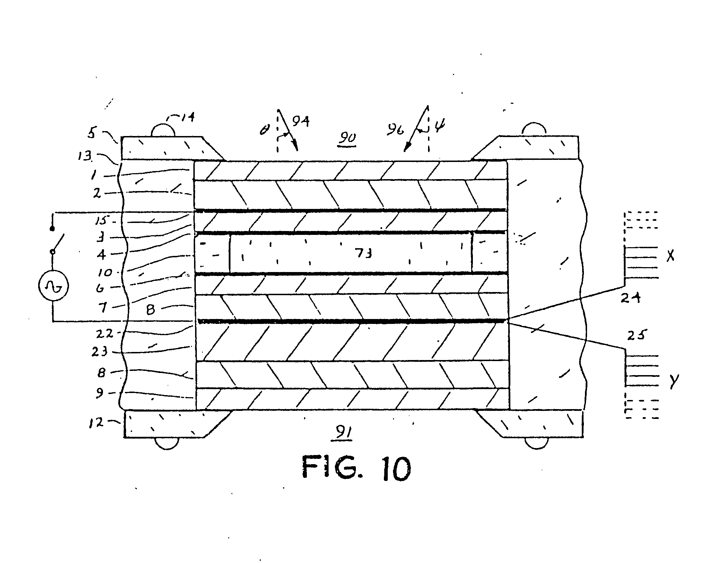

La figure 10 représente une cellule acousto-optique à cristal liquide qui incorpore une matrice ou réseau de photo-détecteurs à semi-conducteurs intégrés, qui donne directement des signaux électriques correspondant à l'intensité acoustique dans le cristal liquide 73. Comme dans les cas précédents, l'impédance acoustique d'entrée $Z_i$ de la cellule est adaptée à celles des milieux de propagation 90, 73, 91 au moyen de parois stratifiées, de sorte que l'énergie acoustique 94 traverse librement toute la structure et exerce une action maximale de distorsion sur les molécules de cristal liquide 73. Une des couches 1, 2, 3 de la paroi d'entrée peut comporter un matériau polarisant tel qu'une suspension dichroïque. Une des couches 7, 8 de l'autre paroi est polarisante, de sorte qu'à l'état de repos de 73 la lumière 96 n'atteigne pas les photodétecteurs 22. Une des couches entre les polariseurs peut aussi être bi-réfringente et agir comme lame demi-onde ou quart-d'onde. Ainsi, l'énergie acoustique 94 qui traverse 73 produit une distorsion de la structure qui modifie l'état de polarisation de la lumière 96 traversant également le cristal liquide 73. Cette modification est traduite en changement d'intensité de la lumière 96 qui atteint un réseau de détecteurs 22 quand l'orientation relative des polariseurs est appropriée.

Sans couche bi-réfringente, avec un cristal liquide nématique 73 homotrope, les polariseurs seront croisés. Les détecteurs 22 peuvent être un réseau de photodiodes, de phototransistors, de photorésistances ou tout autre détecteur convenable connu dans le domaine des circuits intégrés, incluant les dispositifs à transfert de charges.

Cette matrice ou réseau 22 est généralement composée de m x n éléments reliés à des conducteurs multiples 24, 25 relayant les signaux produits par chaque élément, dans les deux dimensions X et Y.

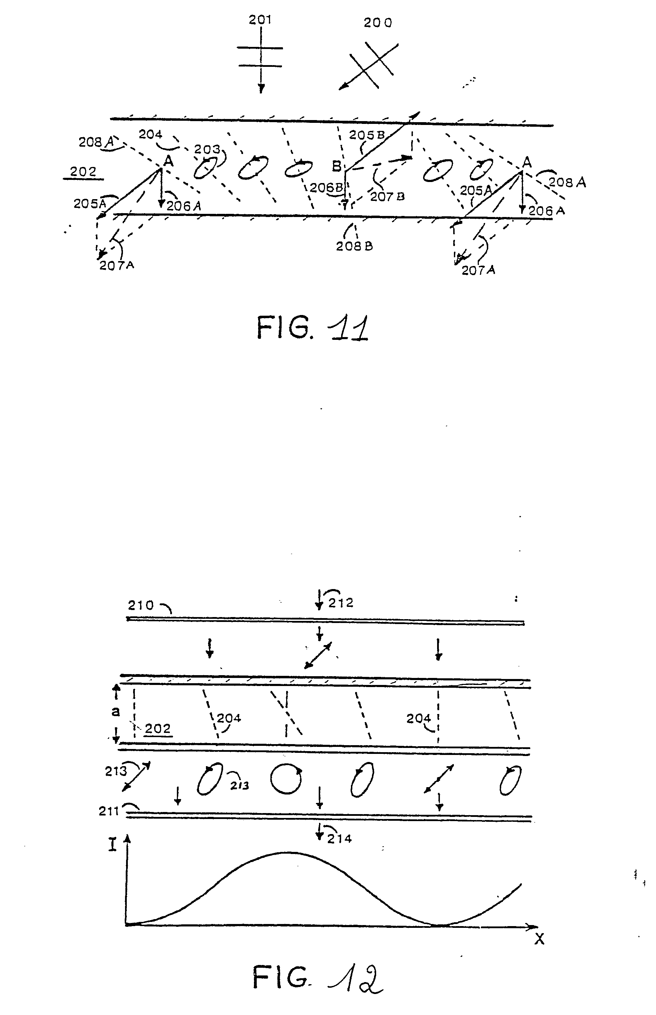

La figure 11 montre l'action de deux ondes ultrasonores longitudinales cohérentes 200, 201 sur l'orientation d'un cristal liquide 202, quand l'orientation initiale de ses molécules est perpendiculaire aux parois (structure homotrope). De façon générale, le mouvement des molécules du c. l. est elliptique (203) à cause du déphasage des vibrations produites par 200 et 201. Il a été établi expérimentalement que les molécules tendent alors à s'orienter selon leur grand axe ou axe directeur, sensiblement dans la direction du petit axe 204 du mouvement. De façon encore plus générale, les molécules tendent à se réorienter localement dans une direction telle que les pertes d'énergie acoustique soient minimales. Une telle direction existe par suite de l'anisotropie de la viscosité d'un cristal liquide. En certains points tels que A, les vibrations 205A, 206A correspondant respectivement aux ondes 200, 201 sont en phase et le déplacement 207A des molécules est rectiligne. Il s'ensuit que les molécules tendent à se réorienter dans la direction 208A perpendiculaire à 207A. En un point B situé à mi-chemin entre deux points A consécutifs, la vibration 205B est déphasée de 180° par rapport à 205A, alors que 206A et 206B sont en phase, de sorte que la vibration résultante 207B se produit dans une direction différente de 207A. Les molécules tendent alors vers l'orientation 208B, différente de 208A. Sous l'action des interférences acoustiques, il se produit donc dans la couche de cristal liquide une modulation spatiale périodique de l'orientation des axes moléculaires et, conséquemment, une variation spatiale périodique des propriétés optiques du milieu. Ces variations peuvent être rendues visibles avec divers dispositifs appropriés, tels que ceux décrits plus loin.

La figure 12 représente l'effet de ces réorientations sur la lumière polarisée transmise par le c. l. La réorientation 204 des molécules de c. l. 202 se produisant dans le plan de la figure, la cellule est placée entre des polariseurs croisés 210, 211, dont les axes sont inclinés de 45° sur le plan de la figure. Dans ces conditions, les ondes lumineuses planes incidentes 212 émergent du cristal liquide 202 avec une polarisation généralement elliptique 213. L'intensité I de la lumière 214 transmise par l'analyseur 211

7

varie donc périodiquement comme indiqué sur le graphique de I(x) en fonction de x. Les variations ou modulations spatiales de l'orientation des molécules de c. l. sont ainsi traduites en variations spatiales d'intensité lumineuse. Des franges d'interférence acoustiques sont donc directement visibles comme franges d'interférences optiques. Si un hologramme acoustique est formé dans la couche de c. l. dans une cellule selon la présente invention, cet hologramme est directement et instantanément transformé en un hologramme optique.

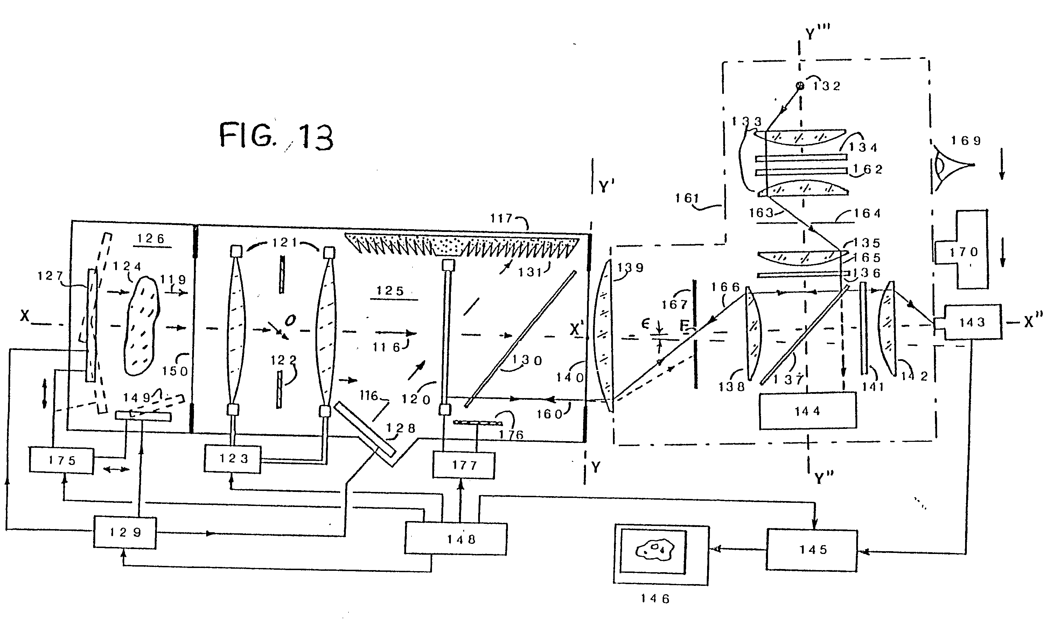

La figure 13 illustre un dispositif utilisant les cellules acousto-optiques à cristal liquide nématique fonctionnant par réflexion, de l'un des types décrits plus haut. L'ensemble constitue une caméra ultrasonore holographique permettant d'examiner des objets et leur intérieur par transmission ou diffusion d'ondes ultrasonores. Le dispositif permet de convertir l'hologramme-image acoustique d'un objet et de ses structures internes, directement et instantanément en hologramme-image optique. Une autre particularité du dispositif est de pouvoir traduire ce dernier hologramme instantanément en une image de l'objet par une méthode électronique. De plus, on peut obtenir à volonté une image d'intensité acoustique ou une image de phase acoustique.

L'enceinte principale 117 est remplie d'un liquide 125 pouvant être de l'eau ou tout autre liquide transmettant facilement l'énergie ultrasonore. La cellule acousto-optique à c. l. 120 est sensiblement perpendiculaire à l'axe 116 du système. Un système de lentilles hydro-acoustiques 121 gonflables par un système de pompes 123, et muni d'un diaphragme 122, focalise sur 120 les ondes acoustiques 119 provenant d'un plan transversal de l'objet à examiner 124. L'objet 124 peut être placé dans un milieu liquide différent 126, séparé du milieu 125 par une membrane acoustiquement transparente 150.

Un transducteur ultrasonore de grande surface 127 produit des ondes sensiblement planes pour l'examen de l'objet 124 par transmission. Ce transducteur peut être en contact avec l'objet si nécessaire. Un autre transducteur 149 peut servir indépendamment à l'irradiation latérale de 124. Dans ce cas, l'énergie acoustique diffusée par les diverses parties de l'objet sert à former une image acoustique sur la cellule 120. Le même transducteur peut aussi occuper alternativement les positions 127 ou 149. Le transducteur 127, pour examen par transmission, peut pivoter, avec deux degrés de liberté, sensiblement autour du centre O de l'objectif acoustique 121. Le transducteur 149 pour examen par diffusion peut de même pivoter autour d'un point situé au voisinage de l'objet. Ceci permet de modifier la phase des ondes acoustiques venant des différents points de l'objet et de réduire dans une large mesure les effets parasites dus à la cohérence de ces ondes, comme il est expliqué plus bas. Un autre transducteur 128 produit une onde acoustique plane 116' d'intensité sensiblement uniforme qui traverse la cellule 120 et cause une réorientation générale ou pré-orientation des molécules du c. l. Ces transducteurs sont excités par un même générateur à fréquence élevée 129 pouvant alimenter des amplificateurs différents pour chaque transducteur et donnant des ondes cohérentes qui interfèrent sur 120. Il se forme ainsi sur la cellule 120 l'hologramme-image d'un plan transversal de l'objet 124, par suite de la modulation spatiale décrite plus haut. La plus grande partie de l'énergie acoustique venant des lentilles 121 traverse la cellule 120 et se réfléchit sur une plaque de verre ou de tout autre matériau transparent isotrope 130 disposée à environ 45° par rapport à la cellule 120. Cette énergie réfléchie est dirigée vers un absorbeur 131. Ce dernier peut être formé d'un assemblage de prismes d'un matériau absorbant pour l'énergie acoustique, tel que du caoutchouc. De même, la plus grande partie de l'énergie acoustique venant du transducteur de pré-orientation 128 traverse la cellule 120 et se trouve absorbée par 131. La fraction de l'énergie réfléchie par la face avant de 120 est également absorbée par la partie avant de l'absorbeur 131 ; dans les deux cas, la pointe des prismes est sensiblement orientée vers l'énergie incidente.

Les ondes lumineuses planes 160 servant à obtenir l'hologramme optique correspondant à l'hologramme acoustique se propagent du côté de la cellule 120 opposé aux lentilles acoustiques 121. Elles traversent la couche de cristal liquide de la cellule à réflexion 120 sensiblement selon la normale et se réfléchissent à peu près dans la même direction vers le système optique extérieur 161 d'où elles proviennent. Mais cette configuration n'est nullement limitative.

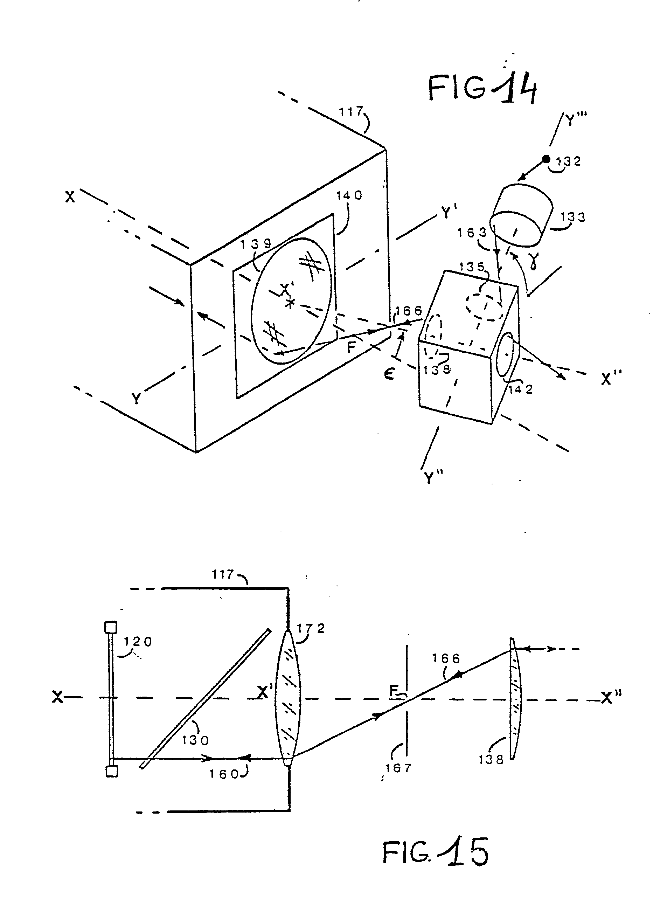

Dans d'autres réalisations de l'invention, par exemple, les ondes lumineuses peuvent se propager du côté des lentilles acoustiques 121, ce qui fait intervenir un miroir optique transparent aux ultrasons ou encore des miroirs acoustiques transparents à la lumière. Dans d'autres réalisations encore, la cellule 120 peut être transparente à la lumière, ce qui fait intervenir soit des miroirs acoustiques optiquement transparents, soit des miroirs optiques acoustiquement transparents. L'énergie lumineuse peut provenir d'une source incohérente ou cohérente quasiponctuelle 132 associée au condenseur 133. Ce condenseur peut comporter particulièrement un filtre d'infrarouge 134 et un filtre coloré ou un filtre interférentiel 162, ou tout autre type de filtre optique. Le faisceau conique 163 traversant l'orifice 164 est réfracté par la lentille 135 qui donne un faisceau sensiblement cylindrique 165, polarisé par le filtre 136. L'axe de polarisation de ce dernier doit être parallèle ou perpendiculaire au plan déterminé par les axes X'X" et Y"Y"' du système optique. L'axe Y"Y"' doit être incliné d'un angle $\gamma$ sur le plan de la figure qui est celui contenant les axes XX' et YY'. L'angle $\gamma$ se retrouve dans la formule 11 et a de préférence une valeur de 45° ou de 135°. La figure 14 précise cette géométrie. Le faisceau 165 est divisé en deux parties d'intensités sensiblement égales par la lame 137. Une partie se perd dans une trappe à lumière ou corps noir 144. L'autre partie est réfractée en un faisceau conique 166 par la lentille 138. Les foyers des lentilles 138 et 139 coïncident en F. Le faisceau conique 166 qui traverse le diaphragme 167 cylindrique 160 après réfraction par la lentille collimatrice 139.

0 010 492

Illustrée à la figure 15, une lentille collimatrice 172 peut aussi être encastrée dans l'enceinte 117 et jouer à la fois le rôle d'élément réfractant comme la lentille 139 de la figure 13 et celui de paroi étanche. Dans ce cas, l'axe X'X'' du système optique peut coïncider avec l'axe XX' de la partie acoustique.

On se réfère de nouveau à la figure 13.

Le faisceau cylindrique 160 traverse la couche de cristal liquide de la cellule 120, se réfléchit sur la paroi opposée qui porte une couche réfléchissante et revient sensiblement dans la même direction. Sa polarisation est alors généralement elliptique. Il repasse la lentille 139 en sens inverse, puis converge vers le diaphragme 167 et la lentille 138. Le faisceau de lumière devient sensiblement cylindrique après réfraction par la lentille 138 et traverse en partie la lame 137. Un polariseur ou analyseur 141 est disposé sur le parcours de la lumière avec son axe de polarisation sensiblement perpendiculaire à celui de 136, de sorte que la lumière est normalement bloquée quand le c. l. de 120 est au repos, sans irradiation ultrasonore, du fait que l'état de polarisation de la lumière qui le traverse n'est pas modifié. La lumière qui émerge de 141 converge ensuite, au moyen de la lentille 142 vers un détecteur approprié tel que l'œil de l'observateur 169, un appareil photographique 170, une caméra vidéo 143 ou tout autre détecteur convenable. L'ouverture du détecteur ou pupille d'entrée coïncide approximativement avec le foyer de la lentille de sortie 142.

Le réglage du détecteur 169, 170, 143 ou autre se fait sur l'image de la cellule 120 donnée par le dioptre 140 et les lentilles 139, 138 et 142. L'axe optique X'X'' du système optique 161 fait un angle E de quelques degrés avec l'axe XX', dans le plan de la figure ou un plan voisin, de sorte que la fraction de l'énergie lumineuse qui se réfléchit sur la face d'entrée 140 de l'enceinte 117 soit bloquée à son retour par le diaphragme 167.

Le bloc 148 désigne un système central de commande des différentes fonctions associées à la caméra ultrasonore à cellule à cristal liquide.

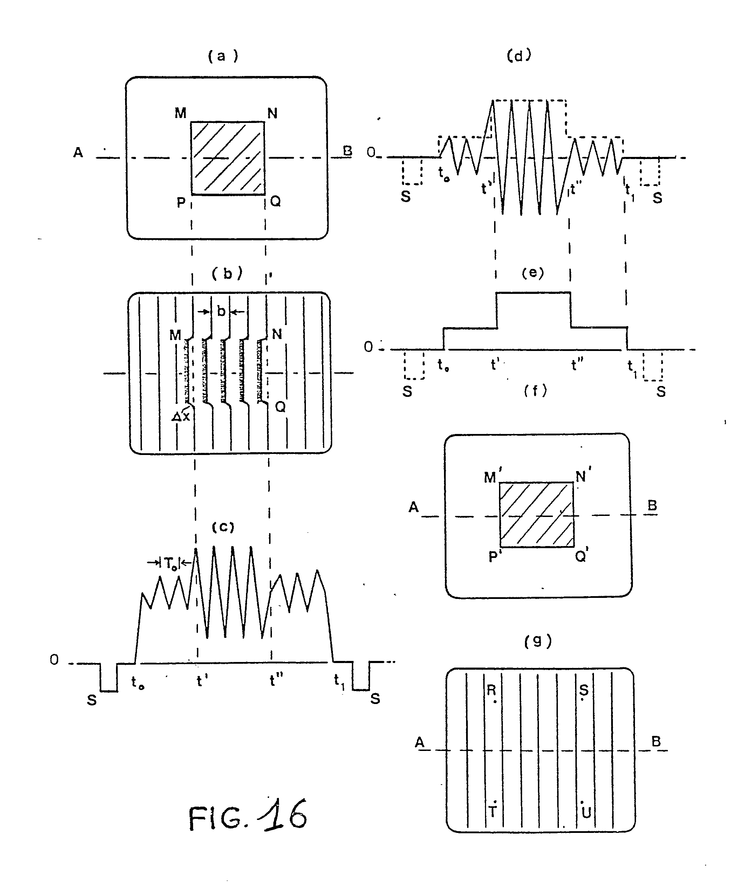

La figure 16 illustre les étapes d'acquisition de l'hologramme acoustique d'un objet et de restitution d'une image visible. En 16a, on voit la distribution d'intensité d'une image acoustique formée par les lentilles 121 (fig. 13) dans le plan de la cellule à c. l. 120 : dans la région MNPQ, l'intensité est uniforme et supérieure à celle de la zone environnante ; AB est une ligne d'observation. L'hologramme-image vu sur 120, à travers le système optique 161 par un détecteur 143, 169, 170 ou autre (figure 13), est représenté en 16b. La région MNPQ correspond à des franges d'interférence de contraste plus élevé que celles de la zone environnante. On peut considérer cet hologramme comme une porteuse spatiale de période b dont l'amplitude est modulée par l'intensité acoustique et dont la phase ou position est modulée ($\Delta x$) par la phase de l'onde acoustique venant de l'objet. La fig. 16-c montre une période du signal vidéo correspondant à la ligne AB, tel que donné par une caméra 143 (fig. 13). A la porteuse spatiale de période b le long de AB correspond la porteuse temporelle de période $T_0$ ou fréquence $f_0$ dont l'amplitude $A(t)$ est modulée par le contraste des franges de l'hologramme et dont la phase $\psi(t)$ est modulée par la position $\Delta x$ des franges de l'hologramme. Dans l'intervalle $t_0 - t_i$, le signal vidéo est sensiblement de la forme : $v(t) = C(t) + A(t) \cos 2\pi f_0 t + \psi(t)$ où $C(t)$ est une valeur moyenne variant peu dans l'intervalle. Les impulsions de synchronisation du signal vidéo composite sont désignées par S.

Ce signal est reçu par le système de traitement 145 (fig. 13) qui peut fournir une image visible défrangée telle qu'à la fig. 19-f.

La figure 17 montre les principales composantes de ce système que nous considérons exclusif au présent procédé. Après un passage par le filtre passe-haut 180 dont la fréquence de coupure est environ $f_0/2$, le signal vidéo (fig. 16-c) est amplifiée par 181 : son aspect est alors comme à la fig. 16-d. L'amplitude est détectée par un redresseur 182. Le filtre passe-bas 183 ayant une fréquence de coupure sensiblement égale à la fréquence fondamentale du signal redressé donne le signal de la fig. 16-e. Le sommateur 184 superpose au signal 16-e les impulsions de synchronisation perdues au cours du filtrage et qui sont régénérées par le circuit 185. Le signal est ensuite amplifié par 186 et dirigé vers un sélecteur 190. Les commutateurs 187, 188 permettent au signal de la caméra 143 de contourner le système de démodulation par la voie 189 et d'afficher l'hologramme-image directement sur le moniteur 146. Un dispositif central de commande 148 (fig. 13 et 17) permet en particulier d'interconnecter via 190 divers éléments tels que le moniteur vidéo 146, un magnétoscope 191, une mémoire vidéo 192, un système de traitement d'images et d'hologramme par ordinateur 193 ou tout autre élément utile. Le signal (fig. 16-e) sortant de la chaîne de démodulation 180 à 186 donne sur le moniteur 146 une image telle qu'illustrée à la fig. 16-f où la zone de luminance plus élevée M'N'P'Q' correspond à la zone d'intensité ultrasonore plus grande de la zone MNPQ de la fig. 16-a. La fig. 16-a montre l'hologramme-image obtenu quand il n'y a pas d'objet devant le transducteur 127 de la fig. 13 : c'est l'hologramme du fond. Sur AB, dans l'intervalle $t_0 - t_i$, l'expression du signal vidéo de ce dernier hologramme est sensiblement :

$$v_0(t) = C_0 + A_0 \cos 2\pi f_0 t \qquad (13)$$

Cet hologramme du fond ou hologramme de référence sert en particulier à obtenir une image de phase de l'objet acoustique au moyen du présent procédé. Si, dans un premier temps, on prend un hologramme du fond et on le stocke dans une mémoire vidéo 192 ou autre 193 et qu'on lui superpose en un deuxième temps l'hologramme-image d'un objet acoustique (fig. 16-b) on obtient l'hologramme-image interférentiel de cet objet. Le long d'une ligne AB de ce dernier, le signal vidéo s'écrit :

9

$$v'(t) = C_0 + C + A_0 \cos 2\pi f_0 t + A \cos [(2\pi f_0 t + \psi(t)]$$

$$v'(t) = C'(t) + A'(t) \cos [2\pi f_0 t + \psi'(t)] \tag{14}$$

avec $C'(t) = C_0 + C$ qui est un terme pratiquement constant et, ce qui est facilement démontré :

$$\text{tg } \psi'(t) = \frac{A \sin \psi(t)}{A_0 + A \cos \psi(t)} \tag{15}$$

$$A'(t) = [A_0^2 + 2 A_0 \cos \psi(t) + A]^{1/2} \tag{16}$$

Ceci montre que le contraste des franges de l'hologramme-image interférentiel, tel que mesuré par l'amplitude $A'(t)$, est fonction de la position des franges de l'hologramme de l'objet et donc de la phase des ondes acoustiques venant de l'objet, car $\psi(t)$ est directement fonction de la position des franges. L'hologramme interférentiel est directement interprétable sur le moniteur 146 (fig. 13), ou on peut obtenir l'image de phase défrangée en acheminant le signal vidéo (éq. 14) à l'entrée de la chaîne de démodulation 180-186 (fig. 17) par la liaison 194 et le commutateur 195.

Ce dernier procédé d'holographie interférentielle permet tout particulièrement de mettre en évidence d'une façon unique et remarquable de minimes modifications s'étant produites dans un objet donné, relativement transparent aux ultrasons, entre deux instants successifs, ou encore de rendre visible de très faibles différences de structure et de forme entre deux objets apparemment identiques selon les techniques courantes d'examen. En effet, supposons qu'on prenne, comme décrit plus haut, l'hologramme acoustique d'un objet et qu'on l'enregistre dans une mémoire vidéo. Comme précédemment, une ligne de cet hologramme peut se représenter par :

$$v_1(t) = C_1 + A_1(t) \cos [2\pi f_0 t + \varphi(t)] \tag{17}$$

Supposons maintenant qu'on prenne un deuxième hologramme du même objet placé exactement au même endroit, mais qui a subi dans l'intervalle une déformation quelconque, ou encore l'hologramme d'un deuxième objet, apparemment identique, placé au même endroit que le premier. Ce deuxième hologramme acoustique, plus ou moins différent du premier, selon les différences structurelles ou autres intervenues, est tel qu'une période ou ligne du signal vidéo peut se représenter par :

$$v_2(t) = C_2 + A_2(t) \cos [2\pi f_0 t + \varphi(t) + \Delta\varphi(t)] \tag{18}$$

Si l'on soustrait ce deuxième hologramme du premier, la ligne correspondante devient, avec quelques manipulations algébriques,

$$v_3(t) = (A_1 - A_2 \cos \Delta\varphi) \cos (2\pi f_0 t + \varphi) + A_2 \sin \Delta\varphi \sin (2\pi f_0 t + \varphi) \tag{19}$$

On peut poser :

$$v_3(t) = b(t) \cos [2\pi f_0 t - \gamma(t)] \tag{20}$$

On a supposé que $C_1 \simeq C_2$. $\Delta\varphi(t)$ mesure le décalage d'une frange du deuxième hologramme par rapport à la frange correspondante du premier : c'est une fonction de la différence de déphasage des ondes acoustiques venant du même point d'un objet à deux instants successifs ou de points correspondants de deux objets différents placés successivement au même endroit. On montre facilement à partir des équations précédentes que l'amplitude du signal résultant est donnée par :

$$b(t) = [A_1^2 - 2 A_1 A_2 \cos \Delta\varphi(t) + A_2^2]^{1/2} \tag{21}$$

Cette équation montre que l'amplitude $b(t)$ du signal correspondant à l'hologramme interférentiel résultant est fonction des perturbations $\Delta\varphi(t)$, causées par des différences qui peuvent être très faibles entre les deux hologrammes et donc par des différences également très faibles entre deux états successifs du même objet au même endroit ou entre deux objets légèrement différents placés successivement au même endroit. Comme dit plus haut, cet hologramme interférentiel ou hologramme de différence peut être directement interprétable sur un moniteur vidéo 146 (fig. 13), ou on peut obtenir l'image de différence défrangée en acheminant le signal vidéo $v_3(t)$ à la chaîne de démodulation 180-186 (fig. 17) par la liaison 194 et le commutateur 195. La phase $\gamma(t)$ est donnée par :

$$\text{tg } \gamma(t) = \frac{A_2 \sin \Delta\varphi(t)}{A_1 - A_2 \cos \Delta\varphi(t)} \tag{22}$$

Cette image de différence faite par holographie interférentielle peut également être obtenue par les méthodes ou procédés suivants. Notons également que par ces mêmes méthodes et procédés, on peut soustraire l'effet d'un milieu perturbateur (ou artéfacts) intermédiaire à l'objet d'intérêt et à la caméra, en prenant premièrement un hologramme acoustique du milieu perturbateur seul, puis un deuxième hologramme avec l'objet que l'on soustrait du premier de la façon décrite. On obtient ainsi une image de l'objet qui est beaucoup plus nette et distincte que par les méthodes courantes. Mentionnons aussi que les perturbations $\Delta\varphi(t)$ peuvent moduler électroniquement un signal vidéo couleur de façon à obtenir une image dite en « pseudo-couleurs » donnant une information additionnelle très intéressante sur l'objet examiné par ultrasons.

Une autre façon d'obtenir l'image d'intensité ou l'image de phase d'un objet acoustique au moyen du présent procédé consiste à acheminer le signal de la caméra vidéo 143 via la liaison 189 à un système de traitement d'image par ordinateur 193 utilisant un algorithme approprié avec transformations de Fourier.

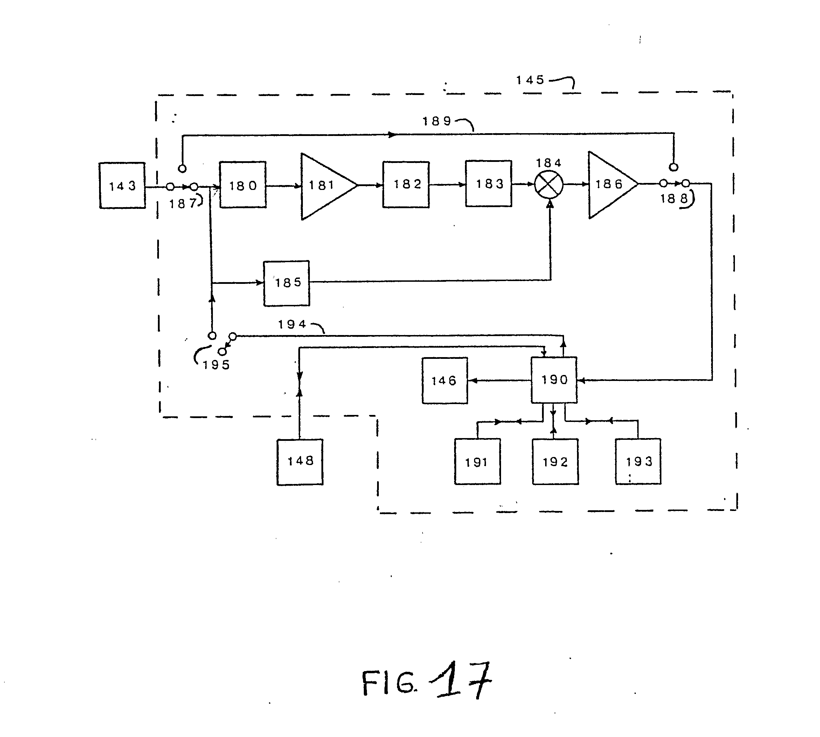

Une autre façon pratique d'obtenir l'image de phase d'un objet acoustique consiste à enregistrer l'hologramme du fond sur pellicule au moyen d'un appareil photographique 170 (fig. 13) et à le superposer d'une façon optique à l'hologramme-image de l'objet tel que vu sur la cellule 120. Ceci peut être réalisé en particulier au moyen du dispositif de la fig. 18 qui s'ajoute au système optique de la fig. 13. L'hologramme du fond 220 précédemment photographié par 170, est placé au voisinage du plan focal objet d'une lentille 221 qui en donne une image virtuelle sur le fond lumineux uniforme d'un écran 222 éclairé par la lame 223. Au moyen d'une lame semi-transparente 224, on superpose cette image de l'hologramme du fond à l'hologramme-image vue à travers la lentille de sortie 142 du système optique. La superposition exacte peut se faire en réalisant la coïncidence des images de points de repère RSTU (fig. 16-g) inscrits sur la cellule à cristal liquide 120. Un détecteur approprié tel que 143, 169, 170, ou autre peut alors enregistrer l'hologramme-image interférentiel d'un objet acoustique. On peut obtenir une image de phase de cet objet en démodulant, comme expliqué plus haut, le signal d'une caméra vidéo 143 au moyen du système de démodulation 145 (fig. 13 et 17). Un avantage remarquable de cette dernière méthode est qu'il suffit d'allumer la lampe 223 (fig. 18) pour remplacer instantanément une image d'intensité par une image de phase du point de vue d'un détecteur 143, 169, 170 ou autre, avec ou sans démodulation par la chaîne 180-186. De plus, un mouvement transversal 225 de l'hologramme 220 produit par une vis micrométrique permet de modifier à volonté, par inversion des contrastes, l'aspect des images de phase obtenues.

Dans tous les cas, l'hologramme inscrit dans le cristal liquide de la cellule 120 peut être effacé rapidement par réorientation des molécules dans un champ électrique alternatif comme il est dit dans le texte en rapport avec la fig. 7. La source de tension alternative 177 (fig. 13), actionnée par le système de commande 148 peut être raccordée à des couches conductrices dont au moins une est semi-transparente, comme la cellule illustrée à la fig. 7. Ou encore, elle peut être raccordée à la couche conductrice réfléchissante 16 de la fig. 7 et à une électrode 176 (fig. 13) plongée dans le liquide extérieur 125 qui est modérément conducteur. Dans ce cas, on élimine le problème de la réflexion de la lumière par une électrode semi-transparente telle que 15 de la fig. 7.

La présente invention permet de corriger substantiellement les défauts d'image causés par la cohérence des ondes acoustiques irradiant un objet. C'est un fait bien connu que cette cohérence entraîne des effets de diffraction indésirables par des structures de l'objet hors du plan d'intérêt. Une façon d'y remédier dans d'autres systèmes est l'utilisation d'une source acoustique de fréquence variant entre certaines limites. Dans le présent système, on corrige ce défaut en superposant une série d'images obtenues en variant progressivement la relation de phase entre les différents points de l'objet irradié par une onde acoustique à fréquence fixe. On obtient cette variation de phase essentiellement en modifiant par étapes l'orientation des transducteurs irradiant l'objet, comme il est indiqué à la fig. 13. Le transducteur 127 pour imagerie par transmission pouvant pivoter autour du point O sensiblement situé au centre du système de lentilles acoustiques 121, plusieurs hologrammes-images sont successivement pris, puis démodulés au moyen du dispositif 145 (fig. 13 et 17). Les images résultantes peuvent être superposées dans une mémoire vidéo 192 ou dans tout système de traitement d'image 193. Elles peuvent aussi être photographiées successivement et superposées sur la pellicule au moyen d'un appareil photographique placé devant le moniteur vidéo 146. Le transducteur 127, entraîné par un moteur 175 mécanique, hydraulique, électrique ou autre, peut pivoter indépendamment dans le plan de la figure et dans un plan perpendiculaire passant par O. La figure 13 montre trois positions possibles du transducteur 127 ayant pivoté dans le plan de la figure. La rotation est typiquement inférieure à 10° dans les deux plans. Pour les mêmes raisons, le transducteur 149 pour imagerie par diffusion peut pivoter de façon semblable autour d'un point généralement situé de l'autre côté de l'objet 124. La prise des images successives et leur superposition se fait alors de la même façon que précédemment.

Une façon d'obtenir une image visible à partir de l'hologramme acoustique d'un objet converti en hologramme visible par la cellule 120 (fig. 13) est illustrée à la fig. 19. C'est une technique purement optique où la source de lumière incohérente précédente est remplacée par un laser 230, associé à une lentille 231 et un filtre spatial 232 pour donner un faisceau de lumière cohérente incidente sur un système optique sensiblement le même que précédemment. Le faisceau convergent 234 qui en émerge est réfracté en un faisceau cylindrique 235 par la lentille 139. Ce faisceau est diffracté par l'hologramme qui se forme dans le cristal liquide de la cellule 120 (fig. 13). La lumière est diffractée principalement dans les spectres d'ordre − 1 (237), 0 (238) et + 1 (239). Au moyen du filtre spatial 236, on bloque les deux premiers en laissant passer l'énergie lumineuse du dernier. Cette énergie émerge du système optique sous forme d'un faisceau 240 convergeant vers un détecteur approprié, tel qu'une caméra vidéo 143, un appareil photographique 170, l'œil d'un observateur 169 ou tout autre détecteur. On a ainsi l'image visible d'un objet acoustique par conversion optique directe d'un hologramme-image acoustique donné par la cellule à cristal liquide 120. Dans ce cas, l'image résultante coïncide normalement avec le plan de la cellule 120.

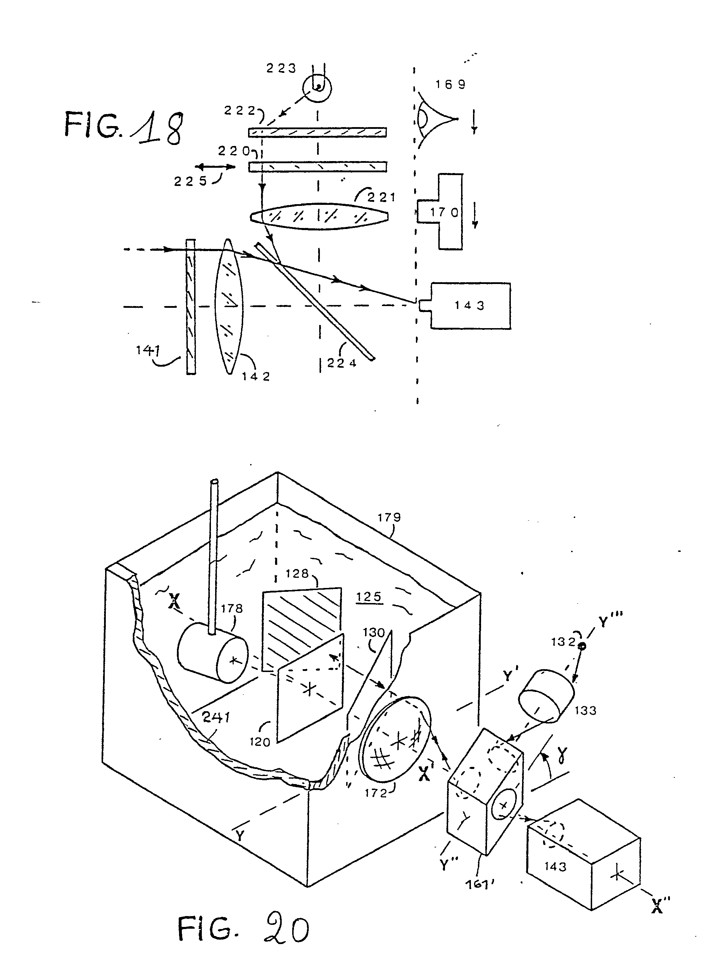

La figure 20 montre une autre méthode d'utilisation d'une cellule à cristal réfléchissante dans le cas où il n'est pas requis d'utiliser de lentilles hydro-acoustiques pour former l'image acoustique d'un objet. Cette méthode est utilisable en particulier quand on désire avoir une représentation visuelle de la distribution d'intensité devant un transducteur ou encore, pour visualiser l'ombre acoustique portée par un objet (ombroscopie). Le dispositif est plus simple que celui de la figure 13, mais les deux ont certains éléments en commun. Une enceinte 179 recouverte à l'intérieur d'un matériau absorbant les ultrasons 241 contient un liquide 125 servant à la propagation des ultrasons. Le système optique extérieur formé de la lentille 172, de la source de lumière 132, du condenseur 133, d'un détecteur et de l'assemblage 161' est dans l'essentiel le même que celui décrit en rapport avec les figures 13 et 15. L'ensemble 161' est sensiblement le même que 161 de la fig. 13 moins le condenseur et la source. La cellule à cristal liquide 120 est disposée de façon à peu près perpendiculaire à l'axe XX' du dispositif. Un transducteur 128 dirige des ondes acoustiques planes vers la cellule 120. Les ondes partiellement réfléchies et transmises par 120 sont absorbées par le vêtement 241. La source ultrasonore 178 dont il est requis d'examiner la distribution d'intensité se place généralement devant la cellule 120, comme illustré. Mais les sources 128, 178 peuvent aussi bien être placées du côté opposé de la cellule 120 : c'est une autre particularité de l'invention. La lame 130 a la même fonction que dans la fig. 13.

Comme dans les transducteurs 127 et 128 de la fig. 13, les transducteurs 128 et 178 reliés à une même source d'énergie électrique à haute fréquence émettent des ondes acoustiques cohérentes. Ces ondes produisent sur la cellule 120 des franges d'interférence dont le contraste est modulé par la distribution d'intensité produite par le transducteur 178. Dans le cas où on veut voir l'ombre d'un objet irradié par des ondes acoustiques, on place cet objet entre un transducteur 178 donnant des ondes planes uniformes et la cellule 120.

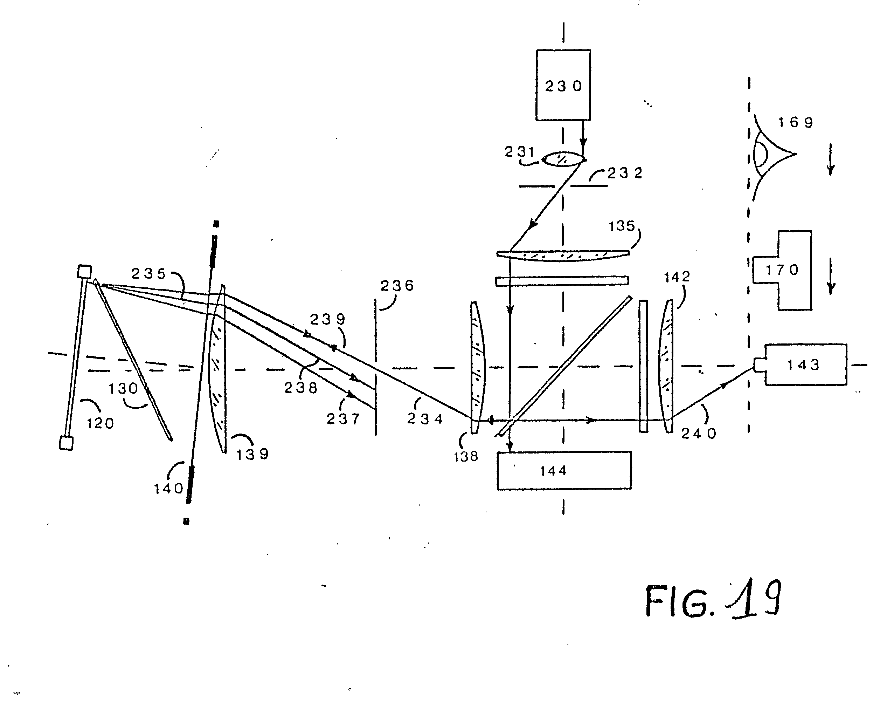

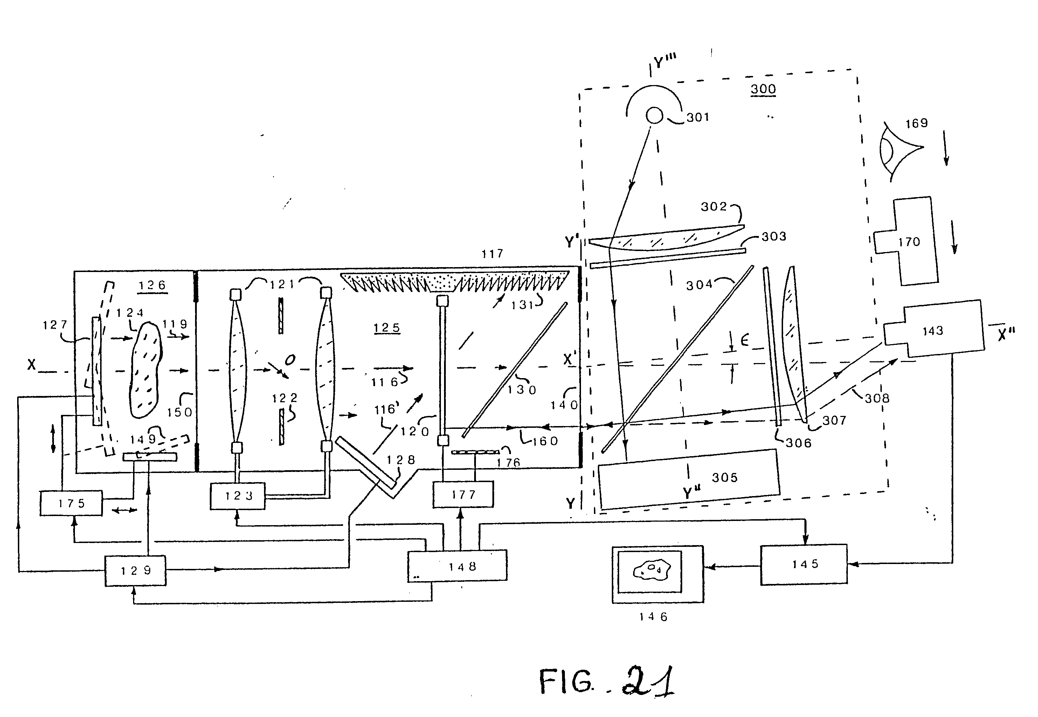

La figure 21 illustre une caméra ultrasonore avec cellule à cristal liquide réfléchissante qui est essentiellement celle de la figure 16, mais où le système optique 161 est remplacé par le système 300 qui comporte certains avantages. Si l'on se réfère à la figure 13, on note que la lumière qui fait aller-retour à travers les lentilles 138 et 139 est polarisée rectilignement. Or l'angle entre le plan de polarisation et le plan d'incidence varie selon le point d'incidence sur les surfaces des lentilles. Il s'ensuit que la lumière transmise acquiert une polarisation elliptique plus ou moins prononcée selon que la réflexion aux interfaces est plus ou moins grande. Cette lumière est donc partiellement transmise par le polariseur ou analyseur 141, d'où la difficulté d'obtenir un champ uniformément sombre du point de vue d'un détecteur tel que 143 quand le cristal liquide dans la cellule 120 n'est pas déformé à l'état de repos. Mais ce défaut peut se corriger si les réflexions aux interfaces des lentilles 138 et 139 sont radicalement réduites par l'emploi de couches anti-reflets multiples. Le système optique 300 de la fig. 21 permet de se dispenser en grande partie de cette exigence en utilisant des lentilles en nombre réduit et ayant des couches anti-reflets et simples. La source de lumière 301, de petites dimensions, polychromatique ou sensiblement monochromatique, est placée dans le plan focal de la lentille 302, sur l'axe Y"Y'" ou au voisinage de cet axe. Les dimensions de cette lentille doivent être telles que le faisceau lumineux émergeant recouvre une portion substantielle de la cellule 120 après réflexion par la lame semi-transparente 304. Le faisceau est polarisé rectilignement par le polariseur 303 dont l'axe de polarisation est dans le plan d'incidence de la lame 304 ou perpendiculaire à ce plan. La fraction de l'énergie lumineuse qui traverse 304 est absorbée par une boîte noire 305 qui joue le même rôle que 144 de la fig. 16. Quand le cristal liquide de la cellule 120 n'est pas déformé, le faisceau cylindrique 160 se réfléchit à travers le cristal liquide sans que son état de polarisation soit modifié : la lumière réfléchie a une polarisation rectiligne. Par conséquent, elle peut être fortement et uniformément bloquée par le polariseur ou analyseur 306 convenablement orienté par rapport à 303. Le champ lumineux vu par un détecteur tel que 143, 169 ou 170 est donc uniformément sombre. Quand le c. l. de 120 subit une déformation sous l'action des ondes ultrasonores 116, 116', la lumière réfléchie devient elliptique, de sorte qu'elle est partiellement transmise par l'analyseur 306 et détectée par un détecteur approprié tel que 143, 170, 169 décrits plus haut. Le détecteur voit une tâche claire sur fond sombre, correspondant à une zone où agit l'énergie ultrasonore sur 120. L'axe Y"Y'" du système optique 300 est de préférence incliné d'environ 45° sur le plan déterminé par les rayons ultrasonores 116, 116', de la même façon que dans le montage de la figure 13. Il s'ensuit que le plan de polarisation de la lumière qui pénètre dans l'enceinte 117 par la fenêtre 140 est incliné d'environ 45° sur le plan déterminé par les rayons 116 et 116' (plan de la figure). De plus, l'axe X'X" du système optique 300 est de préférence incliné d'un petit angle ε sur l'axe XX', de façon que les rayons lumineux 308 réfléchis par la face d'entrée 140 ne pénètrent pas dans la pupille d'entrée du détecteur 143, 169, 170, ou tout autre. Le centre de cette pupille d'entrée peut être sur l'axe X'X" ou au voisinage de cet axe. Les lentilles 302 et 307 peuvent être, par exemple, des lentilles asphériques en matière plastique, avec couches anti-reflets de préférence. Une particularité de ce dispositif, comme d'ailleurs de tous les dispositifs ici décrits utilisant les présentes cellules acousto-optiques à cristal liquide est de pouvoir donner une image positive ou négative, c'est-à-dire de traduire optiquement une zone sur la cellule où l'intensité ultrasonore est plus

**0 010 492**

élevée en une tâche claire sur fond sombre ou en une tâche sombre sur fond clair. Ceci peut se faire dans les dispositifs des fig. 13, 20 et 21 en modifiant légèrement l'angle entre les axes X'X" et Y"Y'", la source et le détecteur étant sur les axes, ou en écartant des axes la source et le détecteur, l'angle entre les axes étant substantiellement de 90°, tout en modifiant quelque peu l'orientation de la cellule à cristal liquide 120. Tous les éléments de la fig. 21, autres que ceux de la partie optique 300, sont essentiellement identiques à ceux des fig. 13, 14 et 20 et remplissent les mêmes fonctions, telles que décrites plus haut.

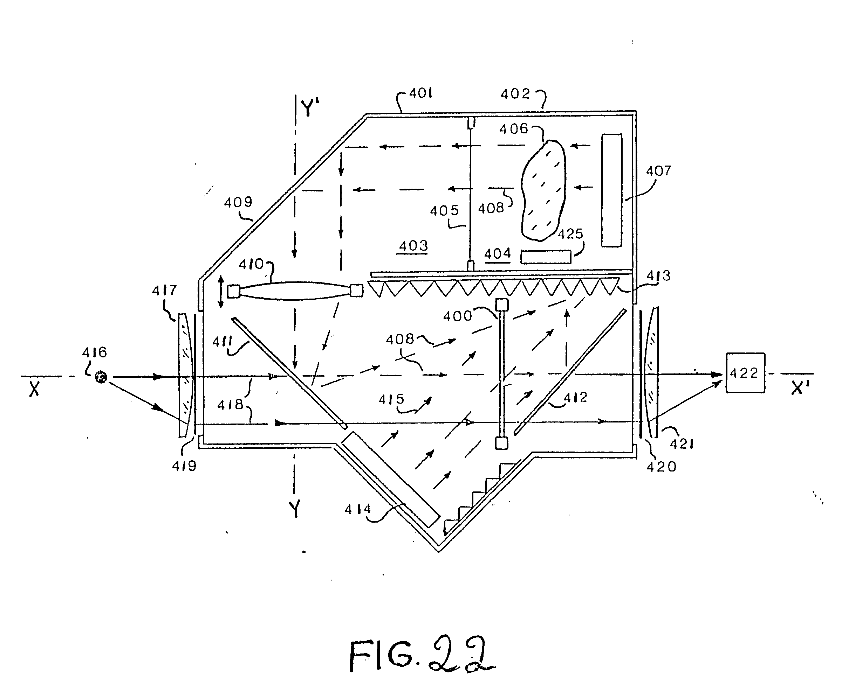

La figure 22 montre un des dispositifs d'imagerie acoustique possible incorporant une cellule acousto-optique à cristal liquide transparent à parois stratifiées rigides. Un avantage particulier de cette réalisation est la simplicité des réglages du système optique pour obtenir une sensibilité maximale. L'objet à examiner 406 est placé dans un compartiment 402 rempli d'un liquide 404 et séparé d'un autre compartiment 401 par une membrane 405 transparente aux ultrasons. L'objet 406 est irradié soit par un transducteur ultrasonore 407 quand on désire obtenir des images ultra-sonores par transmission à travers l'objet, soit latéralement par un transducteur 425 pour avoir des images de l'objet par diffusion des ultrasons. L'énergie ultrasonore 408 émergeant de l'objet traverse la membrane 405 et se dirige vers la lentille acoustique 410 après une réflexion sur une paroi 409. La lentille 410 est faite de préférence en forme de cellule constituée de membranes de matière plastique tendues fortement sur des anneaux boulonnés ensemble et contenant un liquide dans lequel la vitesse du son est inférieure à sa vitesse dans le liquide ambiant 403, et dont le volume peut être modifié au moyen d'une pompe non représentée, permettant ainsi de changer la distance focale de la lentille acoustique ainsi constituée. L'énergie acoustique réfractée par la lentille se réfléchit sur la lame 411 qui est optiquement transparente et converge sur la cellule acousto-optique à cristal liquide 400 où la distribution du champ acoustique est alors une représentation de la distribution d'énergie ultrasonore dans un plan transversal de l'objet 406. L'énergie ultrasonore est incidente sur la cellule 400 de façon à peu près perpendiculaire en moyenne et traverse facilement ladite cellule avec un minimum de réflexions, ce qui permet une interaction maximale avec le cristal liquide contenu dans 400. L'énergie acoustique qui traverse est ensuite réfléchie sur la lame optiquement transparente 412 et se trouve absorbée par un revêtement 413 sur une paroi interne de l'enceinte 401. Un deuxième transducteur ultrasonore 414 est aussi disposé devant la cellule 400, les faces de la cellule et du transducteur faisant un angle voisin de 45°, de sorte que l'énergie émise par 414 soit incidente obliquement sur 400, la plus grande partie traversant librement 400 pour produire une interaction avec le cristal liquide, ce qui émerge étant ensuite absorbé par le revêtement 413. La fraction réfléchie sur 400 étant aussi absorbée par un prolongement de 413 à l'avant de la cellule 400. Les deux ondes ultrasonores 408 et 415 sont substantiellement cohérentes et interfèrent dans le plan de 400 pour donner l'hologramme-image de l'objet 406, lequel hologramme-image est rendu visible en vertu des propriétés remarquables des cellules acousto-optiques décrites plus haut. La cellule 400 est traversée simultanément par un faisceau lumineux substantiellement cylindrique 418 de lumière dont le plan de polarisation est incliné d'environ 45° sur le plan déterminé par les rayons acoustiques 408, 415 (Plan de la figure). Cette lumière vient d'une source de petites dimensions 416 de lumière blanche ou substantiellement monochromatique placée au foyer d'une lentille convergente 417 à l'extérieur de l'enceinte 401. Le faisceau à peu près cylindrique donné par cette lentille traverse ensuite le polariseur 419 dont l'axe de polarisation est incliné d'environ 45° sur le plan de la figure. Ce faisceau lumineux traverse la lame transparente 411, la cellule 400, la lame transparente 412 et est analysé par le polariseur 420. La lentille 421 fait converger la lumière émergeant de 420 vers un détecteur approprié 422 qui peut être identique à ceux décrits en rapport avec les figures 13, 14, 20 et 21. Toutes les méthodes d'observation et de traitement d'hologrammes et d'images décrites en rapport avec les dispositifs des fig. 13, 14, 17, 18, 19, 20 et 21 s'appliquent à ce dispositif de la fig. 22.


**Revendications**


1. Cellule acousto-optique, comportant une couche de cristal liquide nématique orienté (73) contenue entre des parois stratifiées, caractérisée en ce que chacune desdites parois comprend deux lames ou couches rigides ayant sensiblement la même épaisseur (1,3 ; 7,9 ou 20,3 ; 7,33), l'espace (2 ; 8) entre lesdites lames étant occupé par un matériau d'impédance acoustique différente de, et notamment inférieure à, celle desdites lames, lesdites parois réalisant l'adaptation d'impédance acoustique avec le milieu extérieur (90, 91) pour des angles d'incidence de l'énergie acoustique sensiblement entre 0° et 12°, ainsi qu'entre 40° et 50° simultanément (fig. 6).

2. Cellule selon la revendication 1, caractérisée en ce qu'elle comprend dans chaque paroi, entre lesdites lames (20,3 ; 7,33) une lame centrale (18 ; 21), ayant une épaisseur sensiblement double de celle des deux autres, ledit matériau d'impédance acoustique différente occupant l'espace (19,2 ; 8,32) entre la lame centrale (18 ; 21) et chacune des deux autres lames (20,3 ; 7,33).

3. Cellule selon l'une quelconque des revendications 1 et 2, caractérisée en ce que les deux parois stratifiées de ladite cellule sont faites de matériaux optiquement transparents.

4. Cellule selon l'une quelconque des revendications 1 et 2, caractérisée en ce qu'une desdites parois incorpore une matrice bi-dimensionnelle de photodétecteurs à semi-conducteurs intégrés, (22) chacun desdits photodétecteurs pouvant donner un signal électrique en proportion de l'intensité de la lumière y parvenant après avoir successivement traversé une première paroi (1, 2, 3), la couche de cristal liquide (73) et un polariseur (7, 8), ladite intensité étant déterminée par le degré de déformation du cristal liquide, ladite déformation étant fonction du niveau et de l'orientation de la vibration ultrasonore au sein dudit cristal liquide.

5. Cellule selon l'une quelconque des revendications 1, 2 et 4, caractérisée en ce qu'au moins une des lames (1, 3) ou des milieux intermédiaires (2) auxdites lames comprend un matériau polarisant.

6. Cellule selon l'une quelconque des revendications 1, 2 et 4, caractérisée en ce qu'au moins une des lames (1, 3) ou des milieux intermédiaires (2) auxdites lames comprend un matériau optiquement biréfringent.

7. Cellule selon l'une quelconque des revendications 1, 2 et 4, caractérisée en ce qu'un film (15 ; 16) électriquement conducteur et optiquement réflecteur ou semi-réflecteur est disposé sur une des lames d'au moins une desdites parois, de façon à réfléchir la lumière qui a traversé la couche de cristal liquide et à pouvoir créer dans ledit cristal liquide un champ électrique alternatif permettant de réorienter les molécules dudit cristal liquide, quand ledit film conducteur est relié à une borne d'une source de tension alternative (17), l'autre borne étant reliée à une autre couche conductrice formant électrode, disposée du côté opposé de ladite couche de cristal liquide, soit à l'intérieur de l'autre paroi stratifiée de ladite cellule ou à proximité, dans le milieu de propagation des ondes ultrasonores.

8. Cellule selon l'une quelconque des revendications 1, 2, 4 et 7, caractérisée en ce que chacune desdites parois comporte une mince couche d'un composé chimique surfactant (4 ; 6) disposée de façon adjacente entre la première lame rigide et ladite couche de cristal liquide, ledit composé surfactant servant à conférer aux molécules dudit cristal liquide une orientation telle que leur axe optique soit substantiellement perpendiculaire auxdites parois.

9. Cellule selon l'une quelconque des revendications 1, 2, 4 et 7, caractérisée en ce que chacune desdites parois comporte une mince couche d'un composé chimique surfactant (4 ; 6) disposée de façon adjacente entre la première lame rigide et ladite couche de cristal liquide, ledit composé surfactant servant à conférer aux molécules dudit cristal liquide une orientation telle que leur axe optique soit substantiellement parallèle auxdites parois.

10. Cellule selon l'une quelconque des revendications 1, 2, 4 et 7, caractérisée par en ce que le cristal liquide est un composé nématique d'anisotropie diélectrique positive.

11. Dispositif de visualisation sonore d'un objet, comprenant une enceinte (117) contenant un liquide permettant la propagation des ondes acoustiques, ladite enceinte comportant une fenêtre acoustiquement transparente (150) pouvant admettre de l'énergie acoustique provenant d'une source acoustique extérieure (127, 149) et au moins une paroi (140) optiquement transparente laissant passer la lumière venant d'une source lumineuse extérieure ; ladite enceinte (117) comprenant une première source d'énergie acoustique ou transducteur sonore (128) produisant des ondes substantiellement planes, un système de lentilles acoustiques (121) pouvant donner une image avec l'énergie acoustique venant de l'extérieur et des prismes (131) de matière acoustiquement absorbante disposés de façon à réduire substantiellement la réflexion de l'énergie acoustique dans ladite enceinte, la source extérieure d'énergie acoustique dite deuxième source (127, 149) étant dans un liquide en contact avec ladite enceinte et servant à irradier l'objet à examiner (124) ladite énergie acoustique pouvant ensuite pénétrer dans l'enceinte par ladite fenêtre acoustiquement transparente (150), le dispositif comportant en outre un système optique adjacent à ladite enceinte servant à produire un faisceau de lumière sensiblement cylindrique qui pénètre dans ladite enceinte par ladite paroi optiquement transparente (140) caractérisé en ce qu'il comprend dans ladite enceinte (117) une cellule à cristal liquide (120) telle que définie dans l'une quelconque des revendications 1 et 2, une plaque (130) faite d'un matériau optiquement transparent et acoustiquement réflecteur placée entre ladite cellule et une desdites parois (140) optiquement transparentes, ledit faisceau étant orienté de façon à rencontrer ladite cellule à cristal liquide (120) sous une incidence voisine de la normale, le faisceau ayant interagi avec ledit cristal liquide pouvant ensuite sortir de ladite enceinte par une paroi optiquement transparente (140) et être capté par un détecteur optique pour donner une représentation visuelle du champ acoustique associé audit objet à examiner.

12. Dispositif selon la revendication 11, caractérisé en ce que ledit système de lentilles acoustiques est constitué de deux lentilles (121) formées chacune par l'assemblage de deux membranes de matières plastiques tendues entre trois anneaux circulaires faits d'un matériau rigide, lesdites membranes étant placées de part et d'autre d'un anneau intermédiaire, lesdits anneaux étant maintenus ensemble avec les membranes, la cavité entre les membranes contenant un liquide dans lequel la vitesse de propagation du son dans ce milieu est substantiellement inférieure à celle dans le milieu extérieur auxdites lentilles, le volume dudit liquide pouvant être modifié par injection au moyen d'une pompe d'une quantité variable de liquide et un diaphragme (122) situé entre les deux lentilles, celles-ci et le diaphragme ayant leurs axes respectifs substantiellement confondus avec l'axe principal du dispositif.

13. Dispositif selon la revendication 11, caractérisé en ce que ladite première source acoustique est un transducteur ayant une surface d'émission plane et rectangulaire dont les dimensions sont substantiellement supérieures à celles de ladite cellule à cristal liquide, les ondes émises par ledit transducteur étant dirigées vers la cellule à cristal liquide avec une incidence voisine de 45°.

14. Dispositif selon la revendication 11, caractérisé en ce que ladite deuxième source d'énergie

14

acoustique est excitée à une fréquence qui est sensiblement la même que celle du signal appliqué à ladite source.

15. Dispositif selon la revendication 11, caractérisé en ce qu'il comprend des moyens pour déplacer ladite deuxième source acoustique (127) le long d'un arc de cercle dont le centre est situé à proximité de l'objet à visualiser sur l'axe principal du dispositif.

16. Dispositif selon l'une quelconque des revendications 11, et 15, caractérisé en ce que ladite deuxième source peut occuper alternativement une position située sur l'axe principal du dispositif et une position située radialement par rapport audit axe principal (149).

17. Dispositif selon la revendication 11, ayant une seule paroi optiquement transparente, caractérisé en ce que ledit système optique comprend :

— une première ouverture sur un premier axe optique (X'X") par où sort un faisceau de lumière dirigé vers ladite paroi optiquement transparente de ladite enceinte, ladite ouverture servant aussi d'entrée pour la lumière réfléchie par ladite cellule à cristal liquide et revenant substantiellement selon la même direction ;

— une deuxième ouverture située sur le premier axe optique, par où sort la lumière venant de la première ouverture après avoir traversé une lame semi-transparente (304) ;

— une troisième ouverture située sur un deuxième axe optique, (Y"Y'''), sensiblement perpendiculaire au premier axe et le croisant dans le plan de ladite lame semi-transparente, ce plan étant perpendiculaire à celui déterminé par les deux premiers axes optiques, ladite troisième ouverture admettant la lumière venant de ladite source lumineuse extérieure (301) placée au voisinage du foyer d'une première lentille (302) formant un faisceau lumineux sensiblement cylindrique orientée de façon à diriger le faisceau partiellement réfléchi vers la première ouverture et ladite cellule ;

— une quatrième ouverture située sur le deuxième axe optique, par laquelle passe le faisceau de lumière partiellement transmis par ladite lame, et une trappe à lumière (305) disposée derrière cette quatrième ouverture qui reçoit et absorbe substantiellement ledit faisceau de lumière ;

— un premier polariseur (303) centré sur la troisième ouverture et placé entre la première lentille et ladite lame semi-transparente, l'axe de polarisation dudit polariseur étant soit dans le plan d'incidence du faisceau lumineux sur ladite lame, soit perpendiculaire à ce plan d'incidence ;

— une deuxième lentille (307), située dans la deuxième ouverture, ladite lentille faisant converger vers son foyer le faisceau admis par la première ouverture et partiellement transmis par ladite lame ;

— un détecteur optique dont la pupille d'entrée est située au voisinage du foyer de ladite deuxième lentille, un deuxième polariseur centré (306) sur la deuxième ouverture et placé entre la deuxième lentille et ladite lame semi-transparente l'axe de polarisation dudit polariseur étant soit dans le plan d'incidence du faisceau lumineux sur ladite lame, soit perpendiculaire à ce plan d'incidence ; et

— ledit système optique étant disposé de façon que le plan déterminé par lesdits axes optiques fassent un angle sensiblement égal à 45° avec le plan déterminé par la normale à ladite cellule à cristal liquide et la direction des ondes venant de la première source acoustique ou transducteur dans ladite enceinte, le premier axe optique dudit système étant aussi incliné d'un petit angle par rapport à la normale à ladite paroi optiquement transparente, sensiblement dans le plan déterminé par la normale à ladite cellule à cristal liquide et la direction des ondes venant de la première source acoustique dans ladite enceinte.

18. Dispositif selon la revendication 17, caractérisé en ce qu'il comporte :

— deux fenêtres optiquement transparentes dites fenêtres optiques sensiblement parallèles et centrées sur un même axe, lesdites fenêtres étant situées dans des parois opposées de ladite enceinte, ledit axe coïncidant sensiblement avec celui de ladite cellule à cristal liquide ;

— une première plaque (412) faite d'un matériau optiquement transparent et acoustiquement réflecteur, disposée entre ladite cellule et la première desdites fenêtres optiques et dont la normale fait un angle substantiellement égal à 45° avec ledit axe joignant les fenêtres optiques, l'axe traversant la plaque vers son centre ;

— une deuxième plaque (411) faite d'un matériau optiquement transparent et acoustiquement réflecteur, disposé entre ladite cellule et la deuxième desdites fenêtres optiques, sensiblement centrée sur l'axe joignant lesdites fenêtres optiques et orientée de façon à réfléchir vers ladite cellule l'énergie acoustique provenant dudit système de lentilles acoustiques, ladite énergie étant réfléchie dans une direction moyenne sensiblement voisine de la normale à ladite cellule ;

— un système optique permettant d'envoyer à travers ladite enceinte un faisceau de lumière sensiblement cylindrique, allant d'une desdites fenêtres optiques à l'autre en traversant les deux plaques acoustiquement réflectrices et la cellule à cristal liquide dans une direction sensiblement voisine dudit axe joignant les fenêtres optiques, ledit système optique comportant une source de lumière (416) placée à une extrémité de l'axe hors de l'enceinte et un détecteur optique (422) placé à l'autre extrémité de l'axe hors de l'enceinte.

19. Dispositif selon la revendication 18, caractérisé en ce que son système optique comporte :

— une première lentille convergente (417) sensiblement centrée sur l'axe joignant lesdites fenêtres optiques, hors de ladite enceinte acoustique ;

— une source de lumière (416) sensiblement ponctuelle placée au foyer de la première lentille ;

— un premier polariseur (419) placé entre la première lentille et la fenêtre optique adjacente, dont

**0 010 492**

l'axe de polarisation est incliné d'un angle substantiellement égal à 45° sur le plan déterminé par la normale à ladite cellule à cristal liquide et la direction de propagation des ondes produites par ladite première source acoustique ;

— une deuxième lentille convergente (421) sensiblement centrée sur l'axe joignant lesdites fenêtres optiques, lors de ladite enceinte acoustique, devant la deuxième fenêtre optique :

— un deuxième polariseur (420) placé entre la deuxième fenêtre optique et la deuxième lentille ;

— un détecteur optique (422) dont la pupille d'entrée est sensiblement placée au foyer de la deuxième lentille.

20. Dispositif selon l'une quelconque des revendications 17 et 19, caractérisé en ce que ladite source de lumière est incohérente et de forte intensité ou concentration.

21. Dispositif selon l'une quelconque des revendications 17 et 19, caractérisé en ce que ladite source de lumière est cohérente et en ce qu'un filtre spatial est disposé entre ladite deuxième lentille et ledit détecteur optique.

22. Dispositif selon l'une quelconque des revendications 17 et 19, caractérisé en ce que ledit détecteur optique (143 et 422) est une caméra vidéo qui fournit un signal électrique.

23. Dispositif selon la revendication 22, caractérisé en ce qu'un système de stockage d'image (145), est associé à ladite caméra vidéo et permet d'enregistrer un ou plusieurs hologrammes acoustiques donnés par ladite cellule et de superposer une succession desdits hologrammes, de façon à modifier ledit signal électrique.

24. Dispositif selon l'une quelconque des revendications 22 et 23, caractérisé en ce que le signal électrique subit un premier filtrage de type passe-haut (180), puis une détection d'amplitude (182), puis un deuxième filtrage de type passe-bas (182) pour donner un signal vidéo dont l'intensité est substantiellement fonction du contraste des franges d'interférence dudit hologramme acoustique et de la phase des ondes acoustiques incidentes sur ladite cellule à cristal liquide.

25. Dispositif selon la revendication 24, caractérisé en ce que lesdits hologrammes acoustiques mis en mémoire sous forme de signaux électriques sont traités par un ordinateur (193) à partir d'un algorithme permettant de restituer une image dont la luminance est fonction de l'intensité et de la phase des ondes acoustiques incidentes sur ladite cellule.

26. Dispositif selon la revendication 25, caractérisé en ce que ledit signal vidéo est fourni à un écran de contrôle couleur (146) donnant une image visible où l'intensité et la saturation des couleurs sont fonctions de l'intensité et de la phase des ondes acoustiques incidentes sur ladite cellule à cristal liquide.

**Claims**

1. An acousto-optical cell, comprising an oriented liquid crystal layer (73) contained between stratified walls, characterized in that each of said walls comprises two rigid plates or layers having substantially the same thickness (1,3 ; 7,9 ; 20,3 ; 7,33), the space (2 ; 8) between said plates being occupied by a material having an acoustical impedance different from, particularly lower than, that of said plates, said walls realizing the acoustical impedance matching with the exterior propagation medium (90, 91) for angles of incidence of acoustic energy substantially comprised between 0° and 12°, and also between 40° and 50° simultaneously (fig. 6).

2. A cell according to claim 1, characterized in that it comprises in each wall, between said plates (20,3 ; 7,33), a central plate (18 ; 21) which thickness is substantially twice that of the two others, said material of different acoustic impedance occupying the space (19,2 ; 8,32) between the central plate (18 ; 21) and each of the two other plates (20,3 ; 7,33).

3. A cell according to either claim 1 or 2, characterized in that the two stratified wall of said cell are made of optically transparent materials.

4. A cell according to either claims 1 or 2, characterized in that one of said walls comprises a two-dimensional matrix of integrated semiconductor photodetectors (22), each of said photo-detectors being able to give an electrical signal in proportion to the intensity of light reaching it after having successively crossed a first wall (1, 2, 3), the liquid crystal layer (73) and a polarizer (7 or 8), said intensity being determined by the degree of distortion of the liquid crystal, said distortion being a function of the level and direction of the ultrasonic vibration inside said liquid crystal.

5. A cell according to either claims 1, 2 or 4, characterized in that at least one of the plates (1, 3) or the spaces (2) intermediate to said plates comprises a polarizing material.

6. A cell according to either claims 1, 2 or 4, characterized in that at least one of the plates (1, 3) or the spaces (2) intermediate to said plates comprises an optically birefringent material.

7. A cell according to either claims 1, 2 or 4, characterized in that a layer (15 ; 16), electrically conducting and optically reflecting or semi-reflecting, is applied on at least one of the plates of at least one of said walls, in such a way as to reflect the light having crossed the liquid crystal layer and thus produce in said liquid crystal an alternating electric field causing the reorientation of the molecules of said liquid crystal when said conducting layer is connected to one pole of an alternating voltage source (17), the other pole being connected to another conducting layer acting as an electrode, situated on the

16

other side of said liquid crystal layer, either inside the other stratified wall of said cell, or adjacent thereto, in the propagation medium of the ultrasonic waves.

8. A cell according to either claims 1, 2, 4 or 7, characterized in that each of said walls comprises a thin layer of chemically surfactant composite (4 ; 6) interposed between the first rigid layer and said liquid crystal layer, said surfactant composite serving to give the molecules of said liquid crystal an orientation such that their optical axis is substantially perpendicular to said walls.

9. A cell according to either claims 1, 2, 4 or 7, characterized in that each of said walls comprises a thin layer of chemically surfactant composite (4 ; 6) interposed between the first rigid layer and said liquid crystal layer, said surfactant composite serving to give the molecules of said liquid crystal an orientation such that their optical axis is substantially parallel to said walls.

10. A cell according to either claims 1, 2, 4 or 7, characterized the said liquid crystal is a nematic compound of positive dielectric anisotropy.

11. An apparatus for the acoustic imaging of an object, comprising an enclosure (117) containing a liquid medium allowing propagation of acoustic waves, said enclosure comprising an acoustically transparent window (150) allowing admission of acoustic energy coming from an external acoustic source (127, 149) and at least one optically transparent window (140) admitting luminous energy coming from an external source ; said enclosure (117) comprising a first acoustic energy source or ultrasonic transducer (128) producing substantially plane waves, an acoustic lens system (121) that can give an image with the acoustic energy coming from outside, and prisms (131) of acoustically absorbing material placed in such a way as to substantially reduce the reflection of acoustic energy in said enclosure, the external acoustic energy source, hereafter referred to as second source (127, 149), being in a liquid medium in contact with said enclosure and serving to irradiate the object to be examined (124), said acoustic energy being then able to pass into said enclosure through said acoustically transparent window (150), the apparatus also comprising an optical system adjacent to said enclosure used to produce a substantially cylindrical beam of light that passes into said enclosure through said optically transparent window or wall (140), characterized in that said apparatus comprises, in said enclosure (117), a liquid crystal cell (120) such as described in either of claims 1 and 2, a plate (130) made of an optically transparent and acoustically reflecting material placed between said cell and one of said optically transparent windows (140) said beam being directed such as to meet the said liquid crystal cell (120) substantially near normal incidence, the beam having interacted with said liquid crystal having then the possibility to pass outside said enclosure through an optically transparent window (140) and being detected by an optical sensor to give a visible representation of the acoustic field associated with the examined object.

12. An apparatus according to claim 11, characterized in that said acoustic lens system is composed of two lenses (12), each formed by an assembly of two plastic material membranes tensioned between three circular rings made of rigid material, said membranes being placed on each side of an intermediate ring, said rings being fixed together with the membranes, the cavity between the membranes containing a liquid in which the propagation velocity of sound is substantially lower than in the medium external to said lenses, the volume of said liquid being variable by injection with a pump, and a diaphragm (122) situated between the two lenses, said lenses and the diaphragm having their respective axes substantially coincident with the main axis of the apparatus.

13. The apparatus according to claim 11, characterized in that the first acoustic source is a transducer having a plane and rectangular emitting surface which dimensions are substantially larger than those of said liquid crystal cell, the waves emitted by said transducer being directed toward the liquid crystal cell with an angle of incidence near 45°.

14. The apparatus according to claim 11, characterized in that the second acoustic energy source is driven at a frequency which is sensibly the same as that used for the first said source.

15. The apparatus according to claim 11, characterized in that it comprises means to move said second acoustic source (127 ; 407) along the arc of a circle approximately centered on the object to be visualized, on the main axis of the apparatus.

16. The apparatus according to either claims 11 or 15, characterized in that the second source can be alternately situated on the main axis of the apparatus or in a position radially situated relative to the said main axis (149 ; 425).

17. Apparatus according to claim 11, having only one optically transparent window, characterized in that said optical system comprises :

— a first opening on a first optical axis (X'X") through which comes out a beam of light oriented toward the said optically transparent window of the said enclosure, said opening also being used to receive the light reflected by said liquid crystal cell and coming back substantially along the same direction ;

— a second opening situated on the first optical axis through which comes out the light coming from the first opening after having passed through a semi-transparent plate (304) ;

— a third opening situated on a second optical axis (Y"Y'"), substantially perpendicular to the first axis and intersecting it in the plane of said semitransparent plate, this plane being perpendicular to the one determined by the first two optical axes, said third opening admitting light coming from an external source (301) situated near the focus of a first lens (302) forming a sensibly cylindrical light beam

17

oriented in such a way as to direct the partially reflected beam toward the first opening and said cell ;

— a fourth opening situated on the second optical axis, through which passes the light beam partially transmitted by said plate, and a light trap (305) situated behind the fourth opening that receives and substantially absorb said light beam ;

— a first polarizer (303) centered on the third opening and placed between the first lens and said semitransparent plate, the polarization axis of said polarizer being either in the plane of incidence of the beam on said plate or perpendicular to this plane ;

— a second lens (307), situated in the second opening, said lens producing convergence toward its focus of the beam admitted through the first opening and partially transmitted by said plate ;

— an optical detector with its entrance pupil situated at the vicinity of said second lens focus, a second polarizer (306) centered on the second opening and placed between the second lens and the said semi-transparent plate, the polarization axis of said second polarizer being either in the plane of incidence of the light beam on said plate or perpendicular to this plane ; and

— said optical system being disposed in such a way that the plane determined by said optical axes make an angle of substantially 45° with the plane determined by the normal to said liquid crystal cell and the direction of the waves coming from the first acoustic source or transducer in said enclosure, the first optical axis of said system also making a small angle with the normal to the said optically transparent window, said first optical axis being substantially in the plane determined by the normal to said cell and the direction of the waves coming from the first acoustic source in said enclosure.

18. An apparatus according to claim 17, characterized in that it comprises :

— two optically transparent windows hereinafter referred to as optical windows, substantially parallel and centered on a same axis, said windows being situated in opposite walls of said enclosure, said axis being sensibly coincident with that of said liquid crystal cell ;

— a first plate (412) made of an optically transparent and acoustically reflecting material, disposed between said cell and the first of said optical windows, the normal to said plate making an angle of substantially 45° with said axis common to the optical windows, said axis crossing the plate near its center ;

— a second plate (411) made of an optically transparent and acoustically reflecting material, disposed between said cell and the second optical window, substantially centered on the axis joining said optical windows, said plate being oriented such as to reflect toward said cell the acoustic energy coming from said acoustic lens system, said energy being reflected in an mean direction which is substantially that of the normal to said cell ;

— an optical system able to send through said enclosure a substantially cylindrical light beam, from one of said optical windows to the other, passing through the two acoustically reflecting plates and said liquid crystal cell, in a direction close to that of said axis joining said optical windows, said optical system comprising a light source (416) placed at one end of said optical axis outside the enclosure, and an optical detector (422) situated at the other end outside the enclosure.

19. Apparatus according to claim 18, characterized in that its optical system comprises :

— a first converging lens (417) sensibly centered on the axis joining said optical windows, said lens being situated outside the enclosure ;

— a source of light (416), sensibly of point size, placed at the focus of said first lens ;

— a first polarizer (419) placed between said first lens and the adjacent optical window, with its polarization axis making an angle of substantially 45° with the plane determined by the normal to said liquid crystal cell and the propagation direction of the waves produced by said first acoustic source ;

— a second converging lens (421) sensibly centered on the axis joining said optical windows, said lens being situated outside said acoustical enclosure, in front of the second optical window ;

— a second polarizer (420) placed between said second optical window and said second lens ;

— an optical detector (422) which entrance pupil is sensibly situated at the focus of said second lens.

20. An apparatus according to either claims 17 or 19, characterized in that said light source is of the incoherent type, with a high intensity or concentration.

21. An apparatus according to either claims 17 or 19, characterized in that said light source is of the incoherent type and a spatial filter is interposed between said second lens and said optical detector.

22. An apparatus according to either claims 17 or 19, characterized in that said optical detector (143 ; 422) is a video camera that provides an electric signal.

23. An apparatus according to claim 22, characterized in that an image recording system is associated with said video camera, making possible the recording of one or several acoustical holograms given by said liquid crystal cell, and superimposing several of said holograms, in such a way as to modify said electric signal.

24. An apparatus according to either claims 22 or 23, characterized in that said electric signal is first submitted to a filtering of the high-pass type (180), then to an amplitude detection (182), then to a filtering of the low-pass type (182) to give a video signal which intensity is substantially a function of the interference fringes contrast of said acoustical hologram and of the phase of the acoustic waves incident on said liquid crystal cell.

25. An apparatus according to claim 24, characterized in that the said acoustical holograms recorded as electric signals are processed by a computer (193) using an algorithm allowing the production of an

0 010 492

image which luminance is a function of the intensity and the phase of the acoustic waves incident on said liquid crystal cell.

26. An apparatus according to claim 25, characterized in that said processed video signal is provided to a colour monitor screen (146) giving a visible image where the intensity and color saturation are functions of the intensity and phase of the acoustic waves incident on said liquid crystal cell.

**Ansprüche**

1. Akusto-optische Flüssigkristallzelle, mit einer flüssigen, nematischen, orientierten Flüssigkristallschicht (73), die sich zwischen lagenweise angeordneten Wänden befindet, dadurch gekennzeichnet, daß jede dieser Wände zwei Platten oder starre Schichten (1,3 ; 7,9 oder 20,3 ; 7,33) aufweist, die im wesentlichen dieselbe Dicke haben, daß der Raum (2 ; 8) zwischen diesen Platten mit einem Material unterschiedlicher, insbesondere geringerer akustischer Impedanz als diejenige der Wände angefüllt ist und daß diese Wände die akustische Impedanzanpassung mit dem Außenmedium (90, 91) für Einfallswinkel der akustischen Energie im wesentlichen zwischen Null Grad und zwölf Grad sowie zugleich zwischen vierzig Grad und fünfzig Grad ermöglichen (Figur 6).

2. Flüssigkristallzelle nach Anspruch 1, dadurch gekennzeichnet, daß sie in jeder Wand, zwischen den genannten Platten (20,3 ; 7,33) eine zentrale Platte (18 ; 21) aufweist, deren Dicke im wesentlichen doppelt so groß ist wie diejenige der beiden anderen, und daß das Material mit unterschiedlicher akustischer Impedanz den Raum (19,2 ; 8,32) zwischen der zentralen Platte (18, 21) und jeder der beiden anderen Platten (20,3 ; 7,33) einnimmt.

3. Flüssigkristallzelle nach Anspruch 1 oder 2, dadurch gekennzeichnet, daß die beiden lagenweise angeordneten Wände der Flüssigkristallzelle aus einem optisch transparenten Material gefertigt sind.

4. Flüssigkristallzelle nach Anspruch 1 oder 2, dadurch gekennzeichnet, daß eine dieser Wände eine zweidimensionale, integrierte Matrix an Halbleiter-Photodetektoren (22) aufnimmt, von denen jeder ein elektrisches, der Intensität des dort eintreffenden Lichtes, das zuvor nacheinander eine erste Wand (1, 2, 3), die Flüssigkristallschicht (73) und einen Polarisator (7, 8) durchtreten hat, proportionales Signal abgeben kann, daß diese Intensität von dem Grad der Deformation des Flüssigkristalls bestimmt ist und daß diese Deformation eine Funktion des Pegels und der Orientation der überhöhfrequenten Schwingung im Inneren des Flüssigkristalls ist.

5. Flüssigkristallzelle nach einem der Ansprüche 1, 2 und 4, dadurch gekennzeichnet, daß mindestens eine der Platten (1, 3) oder das Zwischenmedium (2) dieser Schichten ein polarisierendes Material aufweist.

6. Flüssigkristallzelle nach einem der Ansprüche 1, 2 und 4, dadurch gekennzeichnet, daß mindestens eine der Platten (1, 3) oder das Zwischenmedium (2) dieser Platten ein optisch doppelbrechendes Material aufweist.

7. Flüssigkristallzelle nach einem der Ansprüche 1, 2 und 4, dadurch gekennzeichnet, daß ein elektrisch leitender und optisch reflektierender oder halbreflektierender Film auf einer der Platten mindestens einer dieser Wände so angeordnet ist, daß er das Licht reflektiert, das die Flüssigkristallschicht durchlaufen hat und daß im genannten Flüssigkristall ein wechselndes elektrisches Feld hervorgerufen werden kann, das ein Reorientieren der Moleküle dieses Flüssigkristalls ermöglicht, wenn der leitfähige Film an eine Klemme einer Wechselspannungsquelle (17) angeschlossen ist, deren andere Klemme mit einer anderen, leitenden und eine Elektrode bildenden Schicht verbunden ist, die auf der anderen Seite der genannten Flüssigkristallschicht, entweder im Inneren der anderen, lagenweise angeordneten Wand der Flüssigkristallzelle oder in Höhe, im Fortpflanzungsbereich der überschallfrequenten Wellen, angeordnet ist.

8. Flüssigkristallzelle nach einem der Ansprüche 1, 2, 4 und 7, dadurch gekennzeichnet, daß jede der Wände eine dünne Schicht einer chemischen, oberflächenaktiven Verbindung (4 : 6) aufweist, die angrenzend zwischen der ersten steifen Platte und der genannten Flüssigkristallschicht angeordnet ist, und daß diese oberflächenaktive Verbindung dazu dient, den Molekülen des Flüssigkristalls eine derartige Orientation zu verleihen, daß ihre optische Achse im wesentlichen senkrecht zu den Wänden verläuft.

9. Flüssigkristallzelle nach einem der Ansprüche 1, 2, 4 und 7, dadurch gekennzeichnet, daß jede der Wände eine dünne Schicht einer chemischen, oberflächenaktiven Verbindung (4 ; 6) aufweist, die angrenzend zwischen der ersten steifen Platte und der genannten Flüssigkristallschicht angeordnet ist, und daß diese oberflächenaktive Verbindung dazu dient, den Molekülen des Flüssigkristalls eine derartige Orientation zu verleihen, daß ihre optische Achse im wesentlichen parallel zu den Wänden verläuft.

10. Flüssigkristallzelle nach einem der Ansprüche 1, 2, 4 und 7, dadurch gekennzeichnet, daß der Flüssigkristall eine nematische Verbindung mit dielektrisch positiver Anisotropie ist.

11. Akustisches Sichtgerät für einen Gegenstand, das ein eine Fortpflanzung von akustischen Wellen ermöglichende Flüssigkeit enthaltendes Gehäuse hat, das ein akustisch transparentes Fenster (150), das die von einer äußeren, akustischen Quelle (127, 149) kommende, akustische Energie einläßt und daß

19

mindestens eine optisch transparente Wand (140) aufweist, die von einer äußeren Lichtquelle kommendes Licht durchläßt ; wobei dieses Gehäuse (117) aufweist eine erste Quelle akustischer Energie oder einen Schallwandler (128), der im wesentlichen ebene akustische Wellen liefert, ein System akustischer Linsen (121), die mit der von außen kommenden akustischen Energie ein Bild erzeugen kann und Prismen (131) aus optisch absorbierendem Material, die so angeordnet sind, daß sie im wesentlichen die Reflexion der akustischen Energie am Gehäuse reduzieren, wobei die zweite Quelle (127, 149) genannte äußere Quelle akustischer Energie in einer Flüssigkeit ist, die in Kontakt mit dem genannten Gehäuse steht und dazu dient, das zu betrachtende Objekt (124) zu bestrahlen, wobei die genannte akustische Energie anschließend durch das genannte, akustisch transparente Fenster (150) in das Gehäuse eintreten kann, wobei das Sichtgerät weiterhin ein dem genannten Gehäuse benachbartes optisches System aufweist, das dazu dient, ein im wesentlichen zylindrisches Lichtbündel zu liefern, das durch das genannte, optisch transparente Fenster (140) in das genannte Gehäuse eintritt, dadurch gekennzeichnet, daß es im genannten Gehäuse (117) eine Flüssigkristallzelle (120), wie sie in Anspruch 1 oder 2 definiert ist und eine Platte (130) aus einem optisch transparenten und akustisch reflektierenden Material, die zwischen der genannten Zelle und einer der genannten, optisch transparenten Wände (140) angeordnet ist, aufweist, daß das genannte Bündel so orientiert ist, daß es die Flüssigkristallzelle (120) mit einem in der Nähe der Normalen liegenden Einfallwinkel trifft und daß das Bündel nach seiner Wechselwirkung mit dem Flüssigkristall anschließend an dem Gehäuse durch eine optisch transparente Wand (140) austreten und von einem optischen Detektor aufgenommen wird, um eine visuelle Darstellung des akustischen, dem zu untersuchenden Objekt zugehörigen Feld zu geben.

12. Sichtgerät nach Anspruch 11, dadurch gekennzeichnet, daß das akustische Linsensystem aus zwei Linsen (121) gebildet ist, von denen jede durch Zusammenfügen zweier Membranen aus Kunststoff gebildet ist, die zwischen drei, aus einem steifen Material gefertigten Kreisringen aufgespannt sind, daß diese Membranen beidseits eines mittleren Rings angeordnet sind, daß diese Ringe mit den Membranen zusammengehalten sind, daß der Hohlraum zwischen den Membranen eine Flüssigkeit aufweist, in der die akustische Fortpflanzungsgeschwindigkeit der Umgebung deutlich unterschiedlich zu der Fortpflanzungsgeschwindigkeit im Bereich außerhalb der Linsen ist, daß das Volumen der genannten Flüssigkeit geändert werden kann durch Injektion einer veränderbaren Menge an Flüssigkeit mittels einer Pumpe, daß sich zwischen den beiden Linsen eine Blende (122) befindet und daß die jeweiligen Achsen der Linsen und der Blende im wesentlichen mit der Hauptachse des Sichtgerätes zusammenfallen.

13. Sichtgerät nach Anspruch 11, dadurch gekennzeichnet, daß die genannte erste akustische Quelle ein Wandler ist, der eine Ebene und rechtwinklige Emissionsfläche hat, deren Abmessungen wesentlich größer sind als die Abmessungen der Flüssigkristallzelle und daß die von diesem Wandler ausgesandten Wellen mit einem Einfallswinkel in der Nähe von 45° auf die Flüssigkristallzelle gerichtet sind.

14. Sichtgerät nach Anspruch 11, dadurch gekennzeichnet, daß die zweite akustische Quelle bei einer Frequenz erregt wird, die im wesentlichen dieselbe ist wie diejenige des an die genannte Quelle angelegten Signals.

15. Sichtgerät nach Anspruch 11, dadurch gekennzeichnet, daß es Mittel zur Ortsveränderung der zweiten akustischen Quelle (124) entlang eines Kreisbogens aufweist, dessen Zentrum sich in Nähe des darzustellenden Objekts auf der Hauptachse des Sichtgeräts befindet.

16. Sichtgerät nach einem der Ansprüche 1 bis 15, dadurch gekennzeichnet, daß die genannte zweite Quelle alternativ eine Position auf der Hauptachse des Sichtgeräts und eine radial zur Hauptachse (149) versetzte Position einnehmen kann.

17. Sichtgerät nach Anspruch 11, mit einer einzigen, optisch transparenten Wand, dadurch gekennzeichnet, daß das optische System aufweist :
— eine erste Öffnung auf einer ersten optischen Achse (X'X'') aus der ein Lichtbündel austritt, das auf die genannte, optisch transparente Wand des genannten Gehäuses gerichtet ist, wobei die genannte Öffnung auch als Eintritt für das Licht dient, das von der genannten Flüssigkristallzelle reflektiert wird und im wesentlichen entlang derselben Richtung zurückläuft ;
— eine zweite, auf der ersten optischen Achse angeordnete Öffnung, durch die das Licht austritt, das von der ersten Öffnung nach Durchtritt durch eine semi-transparente Platte (304) kommt ;
— eine dritte Öffnung, die sich auf einer zweiten optischen Achse (Y''Y''') befindet, welche im wesentlichen rechtwinklig zur ersten Achse verläuft und diese in der Ebene der genannten semi-transparenten Platte schneidet, wobei diese Ebene rechtwinklig zu derjenigen Ebene ist, die durch die beiden ersten optischen Achsen bestimmt ist, wobei die dritte Öffnung das von der genannten äußeren optischen Quelle (301) stammende Licht durchläßt, die in Nähe des Brennpunktes einer ersten Linse (302) angeordnet ist, die ein im wesentlichen zylindrisches Lichtbündel bildet, das so orientiert ist, daß das teilweise reflektierte Bündel zur ersten Öffnung und zur genannten Zelle gerichtet ist ;
— eine vierte Öffnung, die auf der zweiten optischen Achse angeordnet ist und durch die das Teilbündel des an der genannten Platte reflektierten Lichtbündels hindurchtritt und mit einer Lichtfalle (305), die hinter dieser dritten Öffnung angeordnet ist und dieses Lichtbündel aufnimmt und im wesentlichen absorbiert ;
— einen ersten Polarisator (303), der auf die dritte Öffnung zentriert und angeordnet ist zwischen der ersten Linse und der genannten, semi-transparenten Platte, die Polarisationsachse dieses Polarisators ist entweder in der Einfallsebene des Lichtbündels auf die genannte Platte oder rechtwinklig zur Einfallsebene ;

— eine zweite Linse (307), die in der zweiten Öffnung angeordnet ist und die zu ihrem Brennpunkt hin das die erste Öffnung durchlaufende und partiell von der genannten Platte durchgelassene Bündel konvergieren läßt ;

— einen optischen Detektor, dessen Eintrittspupille in Nähe des Brennpunktes der genannten zweiten Linse angeordnet ist, einen zweiten Polarisator (306), der zur zweiten Öffnung zentriert und angeordnet ist zwischen der zweiten Linse und der genannten Semitransparenten Platte, wobei die Polarisationsachse dieses Polarisators entweder in der Einfallsebene des Lichtbündels auf die genannte Platte oder rechtwinklig zu dieser Einfallsebene verläuft, und

— dadurch, daß das genannte optische System derart angeordnet ist, daß die von den genannten optischen Achsen bestimmte Ebene einen Winkel von im wesentlichen 45° mit der Ebene einschließt, die von der Normalen auf die genannte Flüssigkristallzelle und die Richtung der von der ersten akustischen Quelle oder dem Wandler in das genannte Gehäuse laufenden Wellen bestimmt ist, wobei die erste optische Achse dieses Systems zudem um einen geringen Winkel geneigt ist bezüglich einer Normalen zur genannten, optisch transparenten Wand, im wesentlichen in der Ebene, die bestimmt ist durch die Normale zur genannten Flüssigkristallzelle und der Richtung der Wellen, die von der ersten akustischen Quelle in das genannte Gehäuse laufen.

18. Sichtgerät nach Anspruch 17, dadurch gekennzeichnet, daß es aufweist :

— zwei optisch transparente Fenster, die optische Fenster genannt werden und im wesentlichen parallel und zentriert sind auf einer gleichen Achse, diese Fenster sind in gegenüberliegenden Wänden des genannten Gehäuses angeordnet, die genannte Achse fällt im wesentlichen mit derjenigen der genannten Flüssigkristallzelle zusammen ;

— einer ersten Platte (412), die aus einem optisch transparenten und akustisch reflektierenden Material gefertigt und zwischen der genannten Zelle und dem ersten der genannten optischen Fenster angeordnet ist und deren Normale einen Winkel von im wesentlichen gleich 45° mit der genannten Achse, die die optischen Fenster verbindet, einschließt, diese Achse durchtritt die Platte in ihrem Mittelpunkt ;

— eine zweite Platte (411), die aus einem optisch transparenten und akustisch reflektierenden Material gefertigt und zwischen der genannten Zelle und dem zweiten der genannten optischen Fenster angeordnet ist, wobei sie im wesentlichen auf der Achse zentriert ist, die diegenannten optischen Fenster verbindet und dergestalt orientiert ist, daß sie die von dem akustischen Linsensystem kommende akustische Energie zur genannten Zelle reflektiert, wobei diese Energie in eine mittlere Richtung reflektiert wird, die im wesentlichen der Normalen zur genannten Zelle benachbart ist ;

— einem optischen System, das es ermöglicht, durch das genannte Gehäuse ein im wesentlichen zylindrisches Lichtbündel zu senden, das von einem der genannten optischen Fenster zum anderen geht und die beiden akustisch reflektierenden Platten sowie die Flüssigkristallzelle durchsetzt in einer Richtung, die im wesentlichen benachbart ist der genannten Achse, die die optischen Fenster verbindet, wobei dieses optische System eine Lichtquelle (416), die an einem Endbereich der Achse außerhalb des Gehäuses und einen optischen Detektor (422) aufweist, der am anderen Endbereich der Achse außerhalb des Gehäuses angeordnet ist.

19. Sichtgerät nach Anspruch 10, dadurch gekennzeichnet, deß sein optisches System aufweist :

— eine erste Sammellinse (417), die im wesentlichen auf der die optischen Fenster verbindenden Achse und außerhalb des genannten akustischen Gehäuses angeordnet ist ;

— eine Lichtquelle (416), die im wesentlichen punktuell ist und sich im Brennpunkt der ersten Linse befindet ;

— einen ersten Polarisator (419), der zwischen der ersten Linse und dem benachbarten optischen Fenster angeordnet·ist, dessen Polarisationsachse in einem Winkel von im wesentlichen gleich 45° zu einer Ebene geneigt ist, die durch die Normale auf die genannte Flüssigkristallzelle und die Fortpflanzungsrichtung der von der genannten ersten akustisch Quelle produzierten Wellen bestimmt ist ;

— eine zweite Sammellinse (421), die im wesentlichen auf der die optischen Fenster verbindenden Achse zentriert ist und sich außerhalb des akustischen Gehäuses, hinter dem zweiten optischen Fenster befindet ;

— einen zweiten Polarisator (420), der zwischen dem ersten optischen Fenster und der zweiten Linse angeordnet ist, und

— einen optischen Detektor (422), dessen Eintrittspupille im wesentlichen im Brennpunkt der zweiten Linse angeordnet ist.

20. Sichtgerät nach einem der Ansprüche 17 bis 19, dadurch gekennzeichnet, daß die genannte Lichtquelle inkohärent ist und eine hohe Intensität oder Lichtdichte aufweist.

21. Sichtgerät nach einem der Ansprüche 17 bis 19, dadurch gekennzeichnet, daß die genannte Lichtquelle kohärent ist und daß ein Raumfilter zwischen der genannten zweiten Linse und dem genannten optischen Detektor angeordnet ist.

22. Sichtgerät nach einem der Ansprüche 17 bis 19, dadurch gekennzeichnet, daß der genannte optische Detektor (143 und 422) eine Videokamera ist, die ein elektrisches Signal liefert.

23. Sichtgerät nach Anspruch 22, dadurch gekennzeichnet, daß ein System zur Bildspeicherung (145) mit der genannten Videokamera verbunden ist und es ermöglicht, ein oder mehrere akustische Hologramme speichern, die von der genannten Zelle abgegeben werden und eine Folge derartiger Hologramme übereinanderzusetzen, wobei das elektrische Signal verändert wird.

24. Sichtgerät nach Anspruch 22 oder 23, dadurch gekennzeichnet, daß das elektrische Signal eine erste Filterstufe mit einem Hochpaß (180), danach einen Amplitudendetektor (182), danach eine zweite Filterstufe mit Tiefpaß (183) durchläuft, um ein Videosignal zu liefern, dessen Intensität im wesentlichen eine Funktion des Kontrastes der Interferenzstreifen des genannten akustischen Hologramms und der Phase der akustischen, auf die genannte Flüssigkristallzelle einfallenden Wellen ist.

25. Sichtgerät nach Anspruch 24, dadurch gekennzeichnet, daß die genannten akustischen Hologramme, die in Form von elektrischen Signalen gespeichert werden, von einem Rechner (193) nach einem Algorythmus aufbereitet sind, der es ermöglicht, ein Bild zu rekonstruieren, dessen Helligkeit eine Funktion der Intensität und der Phase der akustischen, auf die genannte Zelle einfallenden Wellen ist.

26. Sichtgerät nach Anspruch 25, dadurch gekennzeichnet, daß das genannte Videosignal einem Farbkontrollmonitor (146) zugeleitet wird, der ein sichtbares Bild gibt, bei dem die Intensität und die Sättigung der Farbe Funktionen der Intensität und der Phase der akustischen, auf die genannte Flüssigkristallzelle einfallenden Wellen ist.

FIG. 1

FIG. 2

1

FIG. 3

FIG. 4

2

FIG. 5

FIG. 6

FIG. 7

**FIG. 8**

**FIG. 9**

0 010 492

94 θ 90 96 ψ

14
5
13
1
2
15
3
4
73
10
6
7    B
22
23
8
9
12

91

X
24
25
Y

FIG. 10

# 0 010 492

FIG. 11

FIG. 12

FIG. 13

FIG 14

FIG. 15

( a )

( d )

( b )

( e )

( f )

( c )

( g )

FIG. 16

FIG. 17

FIG. 18

FIG. 20

FIG. 19

0 010 492

FIG. 21

0 010 492

FIG. 22